# EUROPEAN PATENT SPECIFICATION

(11) **EP 4 371 695 B1**
(45) Date of publication and mention of the grant of the patent: **30.09.2026**
(21) Application number: 22841528.7
(22) Date of filing: 29.08.2022
(51) Int. Cl.: B23K 26/362, B23K 26/08, B23K 26/082, B23K 26/70, B23K 26/142, B23K 31/12, B23K 26/03, B23K 26/06, B41C 1/02, B41N 1/00, B23K 26/361, B23K 26/38

(54) **PLATEMAKING APPARATUS FOR LASER ENGRAVING, CONTROL SYSTEM WITH SUCH APPARATUS, PLATEMAKING METHOD USING SUCH APPARATUS**
VORRICHTUNG ZUR HERSTELLUNG VON DRUCKPLATTEN MITTELS LASERGRAVUR, STEUERUNGSSYSTEM MIT EINER SOLCHEN VORRICHTUNG, PLATTENHERSTELLUNGSVERFAHREN UNTER VERWENDUNG EINER SOLCHEN VORRICHTUNG
APPAREIL DE FABRICATION DE PLAQUES PAR GRAVURE AU LASER, SYSTÈME DE COMMANDE AVEC UN TEL APPAREIL, PROCÉDÉ DE FABRICATION DE PLAQUES UTILISANT UN TEL APPAREIL

(30) Priority: 12.07.2021 CN 202110782248
(43) Date of publication of application: 22.05.2024
(73) Proprietor: China Banknote Security Printing Technology Research Institute Co., Ltd, Beijing 100070 (CN); China Banknote Designing And Engraving Co., Ltd., Beijing 102629 (CN); China Banknote Printing and Minting Corp., Beijing 100044 (CN)
(72) Inventor: QU, Mingsheng, Beijing 100070 (CN); LIU, Yongjiang, Beijing 100070 (CN); ZHANG, Linyuan, Beijing 100070 (CN); PAN, Pinli, Beijing 100070 (CN); DONG, Xueliang, Beijing 100070 (CN); WANG, Xue, Beijing 100070 (CN); MA, Jian, Beijing 100070 (CN); QU, Yuan, Beijing 100070 (CN); HAN, Xuyan, Beijing 100070 (CN); YAO, Zongyong, Beijing 100070 (CN); WANG, Xue, Beijing 100070 (CN); LI, Feng, Beijing 100070 (CN); WANG, Chuan, Beijing 100070 (CN); BO, Yuxia, Beijing 100070 (CN); ZHANG, Meng, Beijing 100070 (CN)
(74) Representative: Dr. Weitzel & Partner
(86) International application number: PCT/CN2022/115475
(87) International publication number: WO 2023/284895

(56) References cited:
- CN-A- 1 387 996
- CN-A- 113 231 745
- CN-A- 115 041 826
- CN-U- 203 509 351
- CN-Y- 2 439 923
- JP-A- 2010 237 298
- JP-A- 2019 014 133
- US-A- 5 385 092
- US-A1- 2003 149 507
- US-A1- 2007 248 907
- US-A1- 2010 167 431
- US-A1- 2010 272 961

## Description

The present invention relates to the field of platemaking apparatuses, and specifically, relates to a platemaking apparatus for laser engraving, a control system comprising the platemaking apparatus, and a platemaking method using the platemaking apparatus, see claims 1, 15 and 17.

Currently, most of existing platemaking apparatuses using laser to directly engrave a gravure plate use a method for stepping engraving using a single-path laser, when a large-scale printing plate is processed, it takes a long time and has a low working efficiency. Further, a portion of the platemaking apparatuses use a spectroscope to change one beam of laser into multiple paths of laser, while the multiple paths of laser cannot achieve engraving different patterns on the same page with a large width. US5385092A1 (describing the preamble of claim 1) shows embodiments of an apparatus and methods for imaging lithographic plates using laser devices that emit in the near-infrared region, and plates suitable for imaging with the apparatus and methods. Laser output either ablates one or more plate layers or physically transforms a surface layer, in either case resulting in an imagewise pattern of features on the plate. The image features exhibit an affinity for ink or an ink-abhesive fluid that differs from that of unexposed areas.

In order to improve at least one of the above problems, one purpose of the present invention is to provide a platemaking apparatus using laser engraving.

Another purpose of the present invention is to provide a control system comprising the platemaking apparatus using laser engraving.

Another purpose of the present invention is to provide a platemaking method using the platemaking apparatus using laser engraving.

The invention is defined by the features of the independent claims 1, 15, and 17. The dependent claim provide preferred embodiments.

In order to achieve the above purposes, the embodiment of the first aspect of the present invention provides a platemaking apparatus for laser engraving according to claim 1, comprising inter alia: a base; an XY motion platform, which is arranged on the base to move transversely and is used for bearing a printing plate; a support platform, which is disposed on the base, and a movement space is provided between the support platform and the base and allows for the transverse movement of the XY motion platform; a plurality of laser machining assemblies, and the laser machining assemblies are connected to the support platform, and at least a portion of the laser machining assemblies are adapted to move relative to the support platform and are configured to perform laser engraving on the printing plate.

The platemaking apparatus for laser engraving provided in this solution comprises the base, the XY motion platform, the support platform and the laser machining assemblies. Specifically, the base is provided with the XY motion platform and the support platform which are spaced, the XY motion platform is configured to bear the printing plate, while the support platform is configured to bear the laser machining assemblies for engraving the printing plate. The support platform is erected on the base, and there is a certain space between the support platform and the base, the space can provide a movement space allowing for the transverse movement of the XY motion platform, and then the printing plate provided on the XY motion platform can move transversely, in other words, the space ensures that the XY motion platform and the printing plate born by the XY motion platform comprise a two dimensional transverse movement range needed by completing engraving the printing plate. The platemaking apparatus using laser engraving comprises a plurality of laser machining assemblies, and the platemaking apparatus using laser engraving can conduct laser engraving to the printing plate. A portion of the laser machining assemblies are provided on the support platform, at least a portion of the laser machining assemblies are located above the XY motion platform, and this portion is located above the printing plate, to conduct laser engraving to the printing plate. Through the transverse movement of the XY motion platform, the position of the printing plate born by the XY motion platform can be changed, and a region of the printing plate to be engraved reaches below the laser machining assemblies. Meanwhile, through the movement of the respective laser machining assemblies, a desired pattern can be engraved through laser on the engraved region. It is understandable that the processing range of the laser machining assemblies covers the transverse movement range of the XY motion platform.

Compared with the solution in related art of stepping engraving using a single-path laser, through providing a plurality of laser machining assemblies, the speed of laser platemaking can be enhanced. Especially when a large-scale printing plate is processed, the processing time can be reduced effectively, and the processing efficiency can be improved effectively. It is understandable that in the process of laser platemaking, the respective laser machining assemblies need to transversely move to the corresponding positions on the printing plate where image and text information is engraved, to enable respective laser optical path systems can conduct laser engraving to the printing plate at the same time, and thus the efficiency of laser platemaking is improved. Meanwhile, through disposing the laser machining assemblies to be movable structures, each laser machining assembly can work independently, different image and text contents are engraved on the corresponding regions of the printing plate, and the engraving of the whole printing plate is completed through the mutual stitching of the image and text contents on respective regions.

The laser machining assembly comprises: a laser light source, provided on the support platform and used for emitting laser; a laser optical path, connected to the laser light source and used for transmitting the laser; a processing head, located above the XY motion platform and connected to the laser optical path, and the processing head is adapted to move relative to the support platform, and is provided corresponding to the printing plate to conduct laser engraving.

The laser machining assembly provided in this solution comprises the laser light source, the laser optical path and the processing head, which are connected to each other. The laser light source is provided on the support platform, the processing head is located above the XY motion platform, and the laser light source is connected to the processing head through the laser optical path. And the laser light source can generate laser and emits it, the laser is transmitted through the laser optical path to the processing head, and the processing head is located above the printing plate, and the laser is emitted to the printing plate through the processing head to achieve the processing. Through disposing the processing head to be a member which can move relative to the support platform, the processing head can be moved to the corresponding positions on the printing plate where a pattern is engraved to conduct laser engraving, and it is not necessary to move the entirety of the laser machining assembly, therefore, the possibility of the mutual interference between the laser optical paths of the respective laser machining assemblies can be reduced, and meanwhile, the volume of the processing head is relatively small, and correspondingly the processing head can move a longer distance within a limited movement range, and the distance between the processing heads of the plurality of laser machining assemblies is further made relatively small, and more processing heads can be correspondingly provided on one local region of the printing plate, to improve the platemaking efficiency.

In an exemplary embodiment, the support platform is provided with a first transverse movement assembly, and the processing head is connected to the first transverse movement assembly; the first transverse movement assembly comprises a processing head X-axis guide rail and a first X-axis driving mechanism, the first X-axis driving mechanism is in transmission connection with the processing head, and the first X-axis driving mechanism is configured to drive the processing head to do reciprocating movement along the extending direction of the processing head X-axis guide rail, and the extending direction of the processing head X-axis guide rail is parallel to the plane where the XY motion platform is located.

Through disposing the processing head X-axis guide rail and the first X-axis driving mechanism, under the driving of the first X-axis driving mechanism, the processing head can be made to do straight line movement along the extending direction of the processing head X-axis guide rail. And the processing heads of the respective laser machining assemblies are all connected to the processing head X-axis guide rail, and are arranged sequentially along the extending direction of the processing head X-axis guide rail, therefore, the plurality of laser machining assemblies unitedly process a strip region on the printing plate, after the processing, the printing plate is moved transversely via the XY motion platform, and another region of the printing plate is located below the processing head, the processing head moves to a corresponding position, and then a corresponding pattern is engraved through laser. A sliding connection manner is simple and is of high reliability, and helps improve the use stability of the platemaking apparatus using laser engraving.

The first X-axis driving mechanism comprises various power devices, transmitting devices and control devices which are related to by electromechanical common sense and can achieve an X-direction movement, while is not limited to a linear motor, a servo motor and a lead screw.

In the above exemplary embodiment, the first transverse movement assembly comprises a processing head Z-axis guide rail and a first Z-axis driving mechanism connected to the processing head X-axis guide rail, the first Z-axis driving mechanism is in transmission connection with the processing head, and the first Z-axis driving mechanism is configured to make the processing head do reciprocating movement along the extending direction of the processing head Z-axis guide rail; one of the processing head X-axis guide rail and the processing head Z-axis guide rail is connected to the support platform, and the other one is connected to the processing head, and the extending direction of the processing head Z-axis guide rail is perpendicular to the plane where the XY motion platform is located.

Through disposing the processing head Z-axis guide rail and the first Z-axis driving mechanism, under the driving of the first Z-axis driving mechanism, the processing head is made to get close to or away from the printing plate, to engrave different depths in the printing plate, and this is adapted to engrave a plurality of printing plates such as a gravure plate or a silk-screen plate, and thus the platemaking apparatus using laser engraving has a wider application range. In addition, through engraving different depths in the printing plate, engraved image and characters have a high three dimensional degree, and are more complex and then difficult to be imitated, and this helps improve the technical level of the anti-counterfeiting in engraving a gravure plate and silk-screen plate.

The first Z-axis driving mechanism comprises various power devices, transmitting devices and control devices which are related to by electromechanical common sense and can achieve a Z-direction movement, while is not limited to a linear motor, a servo motor and a lead screw.

In any of the above embodiments, the processing head comprises one of a scanning galvanometer, a rotary cutting galvanometer, a multi-prism rotating mirror and a modulator.

When a gravure original plate and a machine gravure plate (a gravure printing plate) are engraved, the scanning galvanometer chooses a bi-axial galvanometer or a tri-axial galvanometer, when a silk-screen plate is engraved, the processing head chooses a quadri-axial, a penta-axial or an octa-axial rotary cutting galvanometer. In addition, for different processing objectives such as etching and punching, when a processing objective changes, the processing head can be replaced to adapt to the change of processing needs, and the platemaking apparatus using laser engraving has a wider application range and a wider processing ability.

In any of the above embodiments, the processing head comprises the scanning galvanometer and a field flattening lens, the scanning galvanometer is connected to the laser optical path, and the field flattening lens is connected to the scanning galvanometer, and is provided below the scanning galvanometer and configured to limit the processing region of the scanning galvanometer.

The processing region of the scanning galvanometer can be limited through providing the field flattening lens, and thus the engraving accuracy of the processing head and the technical level of laser engraving are improved.

According to the present invention, the laser light source comprises a femtosecond laser device.

Compared with an existing picosecond laser device, the picosecond laser device has a relatively large heat affected zone during metal etching, and this affects processing quality, and a processed printing plate has to go through processing links such as acid pickling. In the present solution, through disposing the laser light source to be a femtosecond laser device, a non-linear effect such as avalanche ionization and multiphoton ionization is configured to remove a metal material instantly, and a melting process is not needed, therefore, the heat affected zone is relatively small, the processing qualify of metal is relatively high, moreover, in the process of platemaking, process links such as acid pickling are not needed, and this helps reduce pollution.

In addition, according to a processing mechanism, the laser generated by the femtosecond laser device can process a printing plate of a stainless steel or nickel material.

In any of the above embodiments, the laser optical path is provided with a reflective lens, and the reflective lens is provided at the transition point of the laser optical path and is configured to change the transmission direction of a laser beam.

The reflective lens can change the transmission direction of the laser beam, through reasonably providing the reflective lens, the trend of the laser optical path can be more reasonable, and the possibility of the mutual interference between the laser optical paths of the plurality of laser machining assemblies is reduced. Meanwhile, the orientation of the processing head can be adjusted through providing the reflective lens, and the orientation of the processing head is perpendicular to the plane where the printing plate is located, to be more suitable for laser engraving.

According to the invention, the top wall of the support platform is provided with an optical path motion platform, at least a portion of the laser optical path is provided on the optical path motion platform, and the optical path motion platform is configured as a member which can move transversely relative to the support platform; and at least a portion of the laser machining assembly is provided on the optical path motion platform.

Through providing the optical path motion platform and providing the laser machining assembly on the optical path motion platform, most of the parts of the laser machining assembly can be made to move integrally, and therefore the possibility of damaging the parts such as the laser optical path due to the dragging during the movement is reduced, and the use reliability of the platemaking apparatus using laser engraving is improved.

In an exemplary embodiment, the laser optical path is provided with a telescopic optical path protection tube; the optical path motion platform is provided with the reflective lens, the support platform is provided with a corresponding reflective lens, and the telescopic optical path protection tube is provided between two corresponding reflective lenses.

Through the arrangement that the telescopic optical path protection tube and the reflective lenses can cooperate with each other to adjust the length of the laser optical path between the two reflective lenses, the processing head is made to move along the extending direction of the telescopic optical path protection tube, the laser optical path is protected through the telescopic optical path protection tube, and the movement of the reflective lenses is not affected, and this helps improve the use stability and reliability of the platemaking apparatus using laser engraving.

In the above embodiment, a portion of the laser light source and the laser optical path is provided on the optical path motion platform.

Through providing a portion of the laser light source and the laser optical path on the optical path motion platform, the laser machining assembly can move integrally, and then the stretching and retracting of the laser optical path are reduced, to lower the possibility of the damage of the laser optical path and then improve the use reliability of the platemaking apparatus using laser engraving.

According to the invention, the laser optical path is provided with an optical path member; and the optical path member comprises a shaping device, and according to an exemplary embodiment at least one of a beam expanding and collimating device, a focus point adjusting device and a detecting device.

And the beam expanding and collimating device can compress the divergence angle of the laser; the shaping device can improve the beam quality of the laser, and the shaping device comprises a time shaping module and a space shaping module; through the design of laser energy distribution in time domain and space domain, an energy absorption and transmission and material phase transition process during the processing is regulated, thus achieving the effect of improving the processing efficiency, quality, accuracy and consistency; the focus point adjusting device can adjust the position of the focus point of the laser; the detecting device can achieve one or more of power detection, focus point detection and orientation detection of the laser.

In any of the above embodiments, there are three laser machining assemblies.

Increasing the number of the laser machining assemblies helps improve the speed and the efficiency of the laser platemaking. It is understandable that the larger the number of the laser machining assemblies is, the more complex the control correspondingly is, and this easily affects the quality and accuracy of the laser platemaking. Through disposing the number of the laser machining assemblies properly, on the basis of improving the efficiency of the laser platemaking, the processing consistency of a plurality of the laser machining assemblies is ensured, and a plurality of the laser machining assemblies are limited to work at the same time, to ensure the quality and accuracy of the processing. And the number of the laser machining assemblies can be two, four or other numbers.

In any of the above embodiments, the platemaking apparatus using laser engraving further comprises a dust sucking device, which comprises a dust sucking mouth, and the dust sucking mouth is provided on the XY motion platform, and the dust sucking device is used for collecting gases and dust generated during laser engraving.

After absorbing the high energy of the laser, the surface temperature of the printing plate rises sharply, the materials on the surface of the printing plate are removed instantly; through disposing the dust sucking device, the gases and dust generated during laser engraving can be collected, to reduce the gas pollution to the environment, and meanwhile, the surface of the printing plate is cleaned, and this reduces the possibility that the dust falls on the printing plate or the engraved patterns, to prevent generating any unfavorable effect to the accuracy of the engraving.

In any of the above embodiments, a refrigeration device is provided on the base, and an air outlet of the refrigeration device faces the XY motion platform, and is used for cooling the processing region of the printing plate.

The platemaking apparatus using laser engraving provided in this solution comprises the refrigeration device, and the working range of the air outlet of the refrigeration device covers the processing region of the printing plate, and the printing plate can dissipate heat, to lower the surface temperature of the printing plate and thus reducing the unfavorable effect to the printing plate from the heat during the laser engraving. In addition, the processing residues on the printing plate can further be reduced through blowing, to improve the effect of the dust sucking device.

In any of the above embodiments, a bearing table is provided on the XY motion platform, and the bearing table presents a plate shape; the XY motion platform comprises an X-axis platform and a Y-axis platform which are connected to each other, and the transverse movement direction of the X-axis platform is perpendicular to the transverse movement direction of the Y-axis platform; and one of the X-axis platform and the Y-axis platform is connected to the base, while the other one is connected to the bearing table.

The plate shaped bearing table can be disposed to bear a plate shaped printing plate, and the end surface of the bearing table for bearing the printing plate matches the shape of the printing plate, and thus the printing plate can stick to the bearing table flatly, and then the printing plate is more stable during laser engraving. Through providing the X-axis platform and the Y-axis platform, the printing plate can move transversely along two directions perpendicular to each other. And through the transverse movement of the X-axis platform, the printing plate can adapt to the laser machining assembly better, to ensure the working region corresponding to each laser machining assembly, and through the transverse movement of the Y-axis platform, the next working region in the printing plate can be moved below the laser machining assembly after the laser machining assembly completes processing the current working region. Thus, through the cooperation between the XY motion platform and the laser machining assembly, the simultaneous processing of a plurality of working regions can be accomplished, to ensure the consistency of the processing.

In the above embodiment, the bearing table is detachably connected to the XY motion platform, and the bearing table is a negative pressure adsorption bearing table or a hollow bearing table.

According to the relative position of an image and text region and anon image and text region on the printing plate, the printing plate can be distinguished by a gravure plate, a relief plate, a silk-screen plate and the like; in the case that the printing plate is the gravure plate or the relief plate, the bearing table can be disposed as the negative pressure adsorption bearing table, to perform negative pressure adsorption to the gravure plate or the relief plate, and the gravure plate or the relief plate is attached to the negative pressure adsorption bearing table, and the relative movement of the gravure plate or the relief plate is limited, the stability of the gravure plate or the relief plate during laser engraving is improved, and the engraving accuracy is improved. In the case that the printing plate is the silk-screen plate, the bearing table can be disposed as a hollow bearing table, the silk-screen plate is embedded into the hollow bearing table, to improve the stability of the silk-screen plate during laser engraving, and further improve the engraving accuracy.

According to the present invention, the platemaking apparatus using laser engraving further comprises a visual measuring system, the visual measuring system comprises a three dimensional camera, and the three dimensional camera faces the XY motion platform and is used for detecting the printing plate.

The platemaking apparatus using laser engraving provided in the present solution comprises the visual measuring system, the visual measuring system comprises the three dimensional camera, and the three dimensional camera can perform detection to the working region of the printing plate, and thus, through acquiring a detection result, the movement of the XY motion platform and a plurality of the laser machining assemblies can be controlled more pertinently, to further improve the quality and the accuracy of laser engraving and improve the consistency between movement of the XY motion platform and a plurality of the laser machining assemblies.

The visual measuring system further comprises a planar machine visual device and a three dimensional measurement microscope device, and the planar machine visual device is connected to the three dimensional camera and is used for receiving the detection data of the three dimensional camera before the laser engraving, to conduct three dimensional re-modeling for the printing plate according to the detection data; the planar machine visual device is connected to the three dimensional camera, and used for receiving the detection data of the three dimensional camera during laser engraving and after the completion of laser engraving, to conduct quality detection to the working region of the printing plate.

Specifically, the visual measuring system comprises the planar machine visual device and the three dimensional measurement microscope device, the planar machine visual device conducts a measurement to the size and the planeness of the full width of the printing plate, and sends the measurement data to a controller, and the controller performs the three dimensional re-modeling for the printing plate according to the measurement data. Thus, the measurement data of the planar machine visual device provides a sufficient data support for the transverse movement of the XY motion platform and the movement of the laser machining assembly, to ensure the engraving accuracy. During the engraving and after the completion of the engraving, the three dimensional measurement microscope device is used for detecting the quality of the working region that has been processed, for example, detecting the image and text accuracy, the engraving depth, the stitching accuracy of an engraving unit, and the like, and detecting the effect of the connection and combination of the patterns at the connections of respective units. Therefore, the parameter data such as the width and the depth of the patterns is detected through the three dimensional measurement microscope on line, this makes the three dimensional processing quality of the patterns meet the requirements of design parameters in a great extent, and improves the yield of the printing plate.

A portal frame is provided on the base, a second transverse movement assembly is provided on the portal frame, the three dimensional camera is connected to the portal frame through the second transverse movement assembly, and the three dimensional camera is positioned above the XY motion platform, and the second transverse movement assembly comprises: a camera X-axis guide rail and a camera Z-axis guide rail which is slidably connected to the camera X-axis guide rail; a second X-axis driving mechanism, in transmission connection with the three dimensional camera, and the second X-axis driving mechanism is configured to drive the three dimensional camera to do reciprocating movement along the extending direction of the camera X-axis guide rail; and a second Z-axis driving mechanism, in transmission connection with the three dimensional camera, and the second Z-axis driving mechanism is configured to drive the three dimensional camera to do reciprocating movement along the extending direction of the camera Z-axis guide rail.

Through disposing the portal frame, the mounting position of the three dimensional camera is above the XY motion platform, and thus the three dimensional camera can perform a full width detection to the printing plate provided on the XY motion platform from top to bottom. Meanwhile, through disposing the second transverse movement assembly, the three dimensional camera can move to a corresponding working area. It is understandable that there can be a plurality of three dimensional cameras, which respectively correspond to a plurality of the laser machining assemblies one by one, to conduct the detection when the printing plate is processed by the laser machining assemblies, to improve the processing quality and accuracy of each laser machining assembly and the consistency of a plurality of the laser machining assemblies, and further improve the stitching accuracy of a plurality of the working regions.

In order to achieve the normal movement of the three dimensional camera, the second X-axis driving mechanism and the second Z-axis driving mechanism which are in transmission connection with the three dimensional camera are provided, and are respectively used for driving the three dimensional camera to do reciprocating movement along the extending direction of the camera X-axis guide rail or the extending direction of the camera Z-axis guide rail.

The second X-axis driving mechanism comprises various power devices, transmitting devices and control devices which are related to by electromechanical common sense and can achieve the X direction movement, while is not limited to a linear motor, a servo motor and a screw nut. Likewise, the second Z-axis driving mechanism comprises various power devices, transmitting devices and control devices which are related to by electromechanical common sense and can achieve the Z direction movement, while is not limited to a linear motor, a servo motor and a screw nut.

The second aspect of the present invention provides a control system according to claim 15, comprising inter alia: the platemaking apparatus for laser engraving in any of the embodiments according to the first aspect; a controller, comprising a plurality of control cards, and the plurality of control cards are disposed on while correspond to a plurality of the laser machining assemblies of the platemaking apparatus using laser engraving one by one, to limit a plurality of the laser machining assemblies to work synchronously; a multi-axis numerical control servo platform, connected to the controller and used for receiving a control signal sent from the controller, and providing accurate positioning for the XY motion platform of the platemaking apparatus using laser engraving and for the laser engraving performed by the laser machining assemblies of the platemaking apparatus using laser engraving according to the control signal.

The control system according to the second aspect of the present invention comprises the platemaking apparatus using laser engraving in any of the embodiments according to the first aspect, and thus has all the beneficial effects that any of the above embodiments contains, which is not repeated herein.

In addition, the control system provided by the present solution further comprises the controller and the multi-axis numerical control servo platform; the controller comprises a plurality of control cards, and a plurality of the control cards are disposed corresponding to the plurality of laser machining assemblies, and thus, the plurality of laser machining assemblies can be subjected to the same scheduling, and this further ensures the processing accuracy of a plurality of the laser machining assemblies which perform laser engraving at the same time. And the controller can be a computer. Meanwhile, through disposing the multi-axis numerical control servo platform, the movement of the XY motion platform and the accurate positioning of the laser machining assemblies can be achieved, and thus, the quality of the laser engraving is improved.

For the circumstance that the platemaking apparatus using laser engraving comprises the visual measuring system, the visual measuring system is connected to the controller, and the visual measuring system can feed back the quality of laser engraving in real time, and the controller can adjust dynamically according to the information fed back, and then the consistency of the effect of the laser engraving of a plurality of the laser machining assemblies is improved, therefore, the controller can complete the fast processing of pattern engraving through controlling the output power and the make-break of the laser machining assemblies.

In the above embodiment, the control system further comprises a panoramic display system which is connected to the controller and is used for displaying the working state of the platemaking apparatus using laser engraving.

The panoramic display system can achieve the control and the state display of the platemaking apparatus using laser engraving, and provides a user-friendly platform for operators to operate and monitor the platemaking work in real time, and the operators can know the working state of the platemaking apparatus using laser engraving and the engraving state of the printing plate in real time, therefore, the operability of the control system is improved through improving the visualization of the control system.

The third aspect of the present invention provides a platemaking method for laser engraving accoridng to claim 17, comprising inter alia the following steps: dividing a current engraving unit on a printing plate into a plurality of working regions; moving the positions of laser machining assemblies, and each laser machining assembly corresponds to an independent working region; limiting a plurality of the laser machining assemblies to perform laser engraving to respective working regions simultaneously; accomplishing the processing work of the current engraving unit.

According to the platemaking method provided by the present solution, an engraving unit is divided into a plurality of working regions, and each laser machining assembly is made to process a corresponding working region, and a plurality of the laser machining assemblies can perform the laser engraving simultaneously, and work independently and do not interfere with each other. Thus, the processing speed of the laser engraving work can be improved, and thus the processing efficiency is improved. In addition, through disposing a plurality of laser machining assemblies, the size of the width of the printing plate can further be increased correspondingly, and the printing plate to which the method is applied can have larger sizes of width and

The platemaking method for laser engraving provided in the third aspect of the present invention uses the platemaking apparatus for laser engraving of any of the embodiments in the first aspect, and thus has all the beneficial effects of any of the above embodiments, which are not repeated herein.

In the above embodiment, the step of "dividing a current engraving unit on a printing plate into a plurality of working regions" comprises: reading a pattern engraving file; measuring the size and the planeness of the full width of the printing plate; performing three dimensional re-modeling to the printing plate according to a measured result and generating a 3D model; and dividing the printing plate into a plurality of working regions according to the 3D model.

Through reading the pattern engraving file, based on image and text design information, the laser machining assemblies can process corresponding image and text contents. Through measuring the size and the planeness of the full width of the printing plate, the three dimensional re-modeling is performed to the printing plate by using measured data, and through constructing the 3D model, the processing region of each laser machining assembly can be planned reasonably, and the laser machining assemblies are moved to the corresponding positions, and this helps improve the engraving accuracy.

In the above embodiment, the step of "moving the positions of laser machining assemblies" comprises: adjusting the positions of the laser machining assemblies according to the 3D model; and adjusting the positions of the focus points of the processing heads of the laser machining assemblies according to the 3D model.

Adjusting the positions of the laser machining assemblies according to the 3D model and adjusting the positions of the focus points of the processing heads of the laser machining assemblies according to the 3D model render that the image and text contents to be processed fall into the corresponding working regions, and the image and text contents of different working regions can be interconnected, to ensure the completeness and accuracy of the image and text contents. It is understandable that the working regions can indicate a plurality of working regions in the same engraving unit, and can further indicate a plurality of working regions of two adjacent engraving units.

In any of the above embodiments, after the step of "accomplishing the processing work of the current engraving unit", it comprises: limiting the XY motion platform and moving the next engraving unit adjacent to the current engraving unit on the printing plate to the position corresponding to the laser machining assembly; returning to perform the step of "dividing a current engraving unit on the printing plate into a plurality of working regions"; and accomplishing the processing work of all the engraving units on the printing plate.

The printing plate is divided into a plurality of engraving units, and the engraving units are subjected to laser engraving successively, and after the processing of one engraving unit is accomplished, the printing plate is moved through the XY motion platform, to perform laser engraving to the next engraving unit. Through repeating the above steps, the processing work of the whole printing plate is accomplished, and through dividing each engraving unit into a plurality of working regions, the laser machining assemblies perform laser engraving continuously and uninterruptedly, and thus the processing efficiency is improved.

In the above embodiment, after the step of "accomplishing the processing work of the current engraving unit", it comprises: detecting the connection between adjacent engraving units.

Through detecting the connection between the adjacent engraving units, it helps ensure the completeness and accuracy of the image and text contents, and further ensure the accuracy and quality of the processing, to improve the yield of the printing plate.

In the above embodiment, the printing plate is a gravure plate, after the step of "accomplishing the processing work of all the engraving units on the printing plate", it further comprises: performing an ultrasonic cleaning treatment to the gravure plate; performing a grinding treatment to the gravure plate; performing a vacuum chrome plating treatment to the gravure plate; and printing the gravure plate on a machine.

The platemaking method using laser engraving provided in the present solution cancels the links of acid pickling, electroforming, electroplating and the like that cause significant environmental pollution, and helps solve the problem of severe pollution in related art.

In the above embodiment, the printing plate is a silk screen plate, after the step of "accomplishing the processing work of all the engraving units on the printing plate", it further comprises: welding the silk screen plate into a cylindrical shape; detecting the quality of the silk screen plate; preparing the cylindrical silk screen plate into a silk screen plate roller; and printing the silk screen plate roller on the machine.

The platemaking method for laser engraving provided in the present solution cancels the links of electroforming and the like that cause significant environmental pollution, and helps solve the problem of severe pollution in related art.

The additional aspects and advantages of the present invention will be obvious in the following description, or can be understood through the practice of the present invention.

### BRIEF DESCRIPTION OF THE DRAWINGS

The above and/or additional aspects and advantages of the present invention will be obvious and understood easily from the description of the embodiments in combination with the accompanying drawings:
FIG. 1 is a schematic view of the structure of a platemaking apparatus using laser engraving according to an embodiment of the present invention;
FIG. 2 is a schematic view of the structure of a platemaking apparatus using laser engraving according to an embodiment of the present invention;
FIG. 3 is a schematic view of a connection structure between a first transverse movement assembly and a processing head according to an embodiment of the present invention;
FIG. 4 is a schematic view of the connection relation of a visual measuring system according to an embodiment of the present invention;
FIG. 5 is a schematic view of a control system according to an embodiment of the present invention;
FIG. 6 is a schematic view of the connection relation between a controller and a platemaking apparatus using laser engraving according to an embodiment of the present invention;
FIG. 7 is a block diagram of the flow of a platemaking method using laser engraving according to an embodiment of the present invention;
FIG. 8 is a block diagram of the flow of a platemaking method using laser engraving according to an embodiment of the present invention;
FIG. 9 is a block diagram of the flow of a platemaking method using laser engraving according to an embodiment of the present invention;
FIG. 10 is a block diagram of the flow of a platemaking method using laser engraving according to an embodiment of the present invention;
FIG. 11 is a block diagram of the flow of a platemaking method using laser engraving according to an embodiment of the present invention; and
FIG. 12 is a block diagram of the flow of a platemaking method using laser engraving according to an embodiment of the present invention.

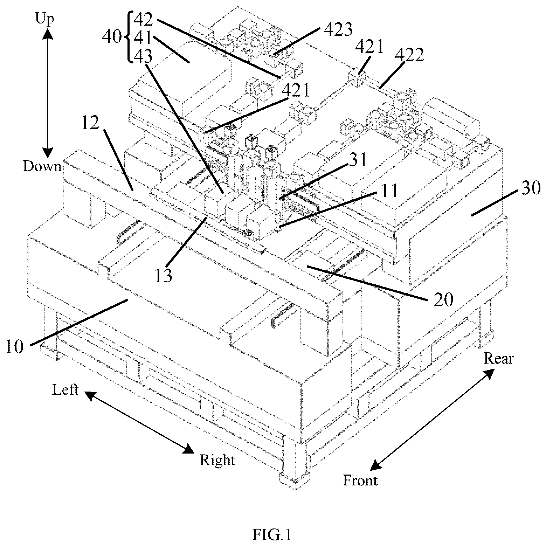

And the corresponding relations between the reference signs and the component names in FIG. 1 to FIG. 12 are as follow:
100 platemaking apparatus using laser engraving; 200 controller; 202 control card; 300 multi-axis numerical control servo platform; 400 panoramic display system,
10 base; 11: dust sucking device; 12 portal frame; 13 second transverse movement assembly; 131 camera X-axis guide rail; 132 camera Z-axis guide rail;
20 XY motion platform; 21 bearing table; 22 X-axis platform; 23 Y-axis platform;
30 support platform; 31 first transverse movement assembly; 311 processing head X-axis guide rail; 312 processing head Z-axis guide rail;
40 laser machining assembly; 41 laser light source; 42 laser optical path; 43 processing head, 431 scanning galvanometer; 432 field flattening lens; 421 reflective lens; 422 telescopic optical path protection tube; 423 optical path member;
50 visual measuring system; 51 three dimensional camera; 52 planar machine visual device; and 53 three dimensional measurement microscope device.

### DETAILED DESCRIPTION OF THE INVENTION

To more clearly understand the above purposes, features and advantages of the present invention, the present invention will be further detailed hereinafter in combination with the accompanying drawings and embodiments. It should be indicated that in the case of no conflict, the embodiments and the features in the embodiments of the present invention can be combined with each other.

Many details are illustrated in the following description for the convenience of a thorough understanding to the present invention, but the present invention can further be implemented using other embodiments other than these described herein. Therefore, the protection scope of the present invention is not limited to the specific embodiments disclosed in the following text.

A platemaking apparatus 100 using laser engraving, a control system, a platemaking method, and a computer-readable storage medium according to some embodiments of the present invention are described in the following by referring to FIG. 1 to FIG. 12.

As shown in FIG. 1, the present invention provides a platemaking apparatus 100 using laser engraving, comprising a base 10, an XY motion platform 20, a support platform 30 and laser machining assemblies 40. And the XY motion platform 20 is arranged on the base 10 to move transversely and is used for bearing a printing plate. The support platform 30 is erected on the base 10, and a movement space is provided between the support platform 30 and the base 10 and allows for the transverse movement of the XY motion platform 20. The laser machining assemblies 40 are connected to the support platform 30, and at least a portion of the laser machining assemblies 40 are adapted to move relative to the support platform 30 and are configured to perform laser engraving on the printing plate.

The platemaking apparatus 100 using laser engraving provided in the present embodiment is provided with a plurality of the laser machining assemblies 40, the respective laser machining assemblies 40are transversely moved to the corresponding positions on the printing plate where image and text information is engraved, to perform laser engraving on the printing plate at the same time, in addition, each laser machining assembly 40 can work independently, different image and text contents are engraved on the corresponding regions of the printing plate, and then the processing work of one engraving unit of the printing plate is completed. Then, through the XY motion platform 20, the next engraving unit of the printing plate is moved transversely to a position corresponding to the laser engraving of the laser machining assemblies 40 to complete the processing work of the unit, and thus, the engraving of the whole printing plate is completed through the cooperation between the XY motion platform 20 and the laser machining assemblies 40.

The platemaking apparatus 100 using laser engraving provided in the present embodiment achieves that a plurality of paths of laser engrave different patterns on the same page with a large width through increasing the number of the laser machining assemblies 40 and making each laser machining assembly 40 work independently, and compared with the related art, this can effectively improve the speed and efficiency of laser platemaking.

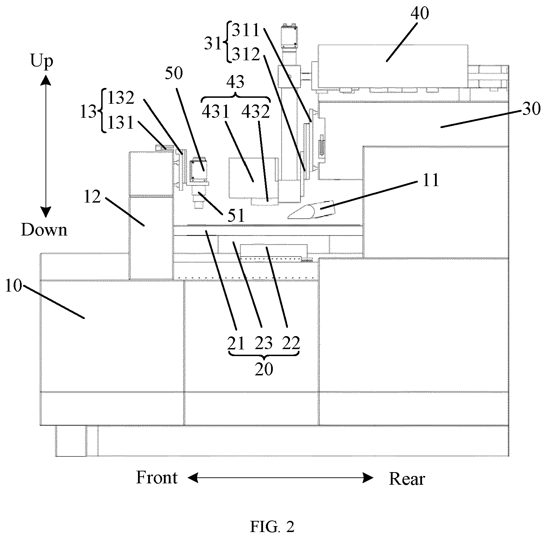

In some embodiments, as shown in FIG. 1 and FIG. 2, the support platform 30 is provided with a first transverse movement assembly 31, and the processing head 43 is connected to the first transverse movement assembly 31; the first transverse movement assembly 31 comprises a processing head X-axis guide rail 311 and a first X-axis driving mechanism, the first X-axis driving mechanism is in transmission connection with the processing head 43, and the first X-axis driving mechanism is configured to drive the processing head 43 to do reciprocating movement along the extending direction of the processing head X-axis guide rail 311, and the extending direction of the processing head X-axis guide rail 311 is parallel to the plane where the XY motion platform 20 is located.

The first X-axis driving mechanism comprises various power devices, transmitting devices and control devices which are related to by electromechanical common sense and can achieve an X-direction movement, while is not limited to a linear motor, a servo motor and a lead screw.

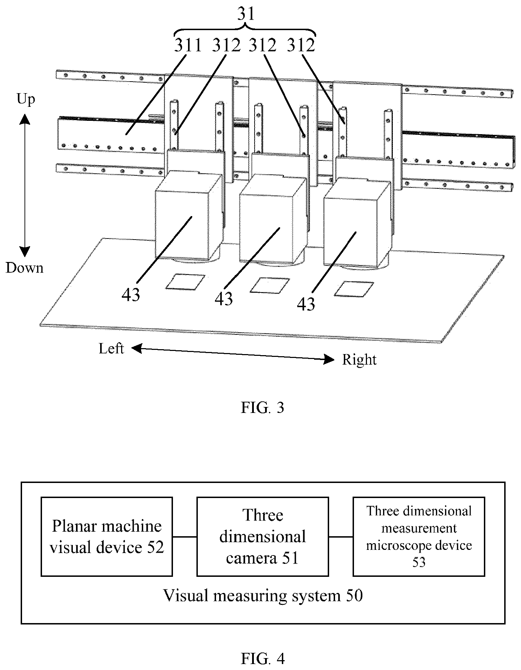

As shown in FIG. 3, the extending direction of the X-axis guide rail is left and right. Through disposing the processing head X-axis guide rail 311, the processing head 43 can do straight line movement along the extending direction of the processing head X-axis guide rail 311. And the processing heads 43 of the respective laser machining assemblies 40 are all connected to the processing head X-axis guide rail 311, and are arranged sequentially along the extending direction of the processing head X-axis guide rail 311, therefore, the plurality of laser machining assemblies 40unitedly process a strip region on the printing plate, after the processing, the printing plate is moved transversely via the XY motion platform, and another region of the printing plate is located below the processing heads 43, the processing heads 43 then move to a corresponding position, and then a corresponding pattern is engraved through laser. A sliding connection manner is simple and is of high reliability, and helps improve the use stability of the platemaking apparatus 100 using laser engraving.

In some embodiments, as shown in FIG. 2 and FIG. 3, the first transverse movement assembly 31 comprises a processing head Z-axis guide rail 312 and a first Z-axis driving mechanism connected to the processing head X-axis guide rail 311, the first Z-axis driving mechanism is in transmission connection with the processing head 43, and the first Z-axis driving mechanism is configured to make the processing head do reciprocating movement along the extending direction of the processing head Z-axis guide rail 312, one of the processing head X-axis guide rail 311 and the processing head Z-axis guide rail 312 is connected to the support platform 30, and the other one is connected to the processing head 43, and the extending direction of the processing head Z-axis guide rail 312 is perpendicular to the plane where the XY motion platform 20 is located.

As shown in FIG. 3, the extending direction of the Z-axis guide rail is upward and downward. Through disposing the processing head Z-axis guide rail 312, the processing head 43 is made to get close to or away from the printing plate, to engrave different depths in the printing plate, and this is adapted to engrave a plurality of printing plates such as a gravure plate or a silk-screen plate, and thus the platemaking apparatus 100 using laser engraving has a wider application range.

The first Z-axis driving mechanism comprises various power devices, transmitting devices and control devices which are related to by electromechanical common sense and can achieve a Z-direction movement, while is not limited to a linear motor, a servo motor and a lead screw.

In addition, through engraving different depths in the printing plate, engraved image and characters have a high three dimensional degree, and are more complex and then difficult to be imitated, and this helps improve the technical level of the anti-counterfeiting of engraving a gravure plate and a silk-screen plate.

In some embodiments, as shown in FIG. 2, the processing head 43 comprises the scanning galvanometer 431 and a field flattening lens 432, the scanning galvanometer 431 is connected to the laser optical path 42, and the field flattening lens 432 is connected to the scanning galvanometer 431, and is provided below the scanning galvanometer 431 and configured to limit the processing region of the scanning galvanometer 431.

The processing region of the scanning galvanometer 431 can be limited through providing the field flattening lens 432, and thus the engraving accuracy of the processing head 43 and the technical level of laser engraving are improved.

In some other embodiments, the processing head 43 comprises one of a rotary cutting galvanometer, a multi-prism rotating mirror and a modulator.

For engraving different printing plates, different types of processing heads 43 are applied. For example, when a gravure original plate and a machine gravure plate (a gravure printing plate) are engraved, the scanning galvanometer 431 chooses a bi-axial galvanometer or a tri-axial galvanometer, when a silk-screen plate is engraved, the processing head 43 chooses a quadri-axial, a penta-axial or an octa-axial rotary cutting galvanometer. In addition, for different processing objectives such as etching and punching, when a processing objective changes, the processing head 43 can be replaced to adapt to the change of processing needs, and the platemaking apparatus 100 using laser engraving has a wider application range and a wider processing ability.

The laser light source 41 comprises a femtosecond laser device.

Compared with an existing picosecond laser device, the picosecond laser device has a relatively large heat affected zone during metal etching, and this affects processing quality, and a processed printing plate has to go through processing links such as acid pickling. In the present embodiment, through disposing the laser light source 41 to be a femtosecond laser device, a non-linear effect such as avalanche ionization and multiphoton ionization is configured to remove a metal material instantly, and a melting process is not needed, therefore, the heat affected zone is relatively small, the processing qualify of metal is relatively high, moreover, in the process of platemaking, process links such as acid pickling are not needed, and this helps reduce pollution. In addition, according to a processing mechanism, the laser generated by the femtosecond laser device can process a printing plate of a stainless steel or nickel material.

In some embodiments, as shown in FIG. 1, the laser optical path 42 is provided with a reflective lens 421, and the reflective lens 421 is provided at the transition point of the laser optical path 42 and is configured to change the transmission direction of a laser beam. The reflective lens 421 is provided at the inflection point of the laser optical path 42.

The reflective lens 421 can change the transmission direction of the laser beam, through reasonably providing the reflective lens 421, the trend of the laser optical path can be more reasonable, and the possibility of the mutual interference between the laser optical paths 42 of the plurality of laser machining assemblies 40 is reduced. Meanwhile, the orientation of the processing head 43 can be adjusted through providing the reflective lens 421, and the orientation of the processing head 43 is perpendicular to the plane where the printing plate is located, to be more suitable for laser engraving.

In a further embodiment, as shown in FIG. 1, the laser optical path 42 is provided with a telescopic optical path protection tube 422; the telescopic optical path protection tube 422 is provided between two adjacent reflective lenses 421. The telescopic optical path protection tube 422 and the reflective lenses 421 cooperate with each other to control the stretching and retracting of the laser optical path 42.

Through the arrangement that the telescopic optical path protection tube 422 and the reflective lenses 421 can cooperate with each other to adjust the length of the laser optical path 42 between the two reflective lenses 421, the processing head 43 is made to move along the extending direction of the telescopic optical path protection tube 422, the laser optical path 42 is protected through the telescopic optical path protection tube 422, and the movement of the reflective lenses 421 is not affected, and this helps improve the use stability and reliability of the platemaking apparatus 100 using laser engraving.

The top wall of the support platform 30 is provided with an optical path motion platform, at least a portion of the laser optical path 42 is provided on the optical path motion platform, and the optical path motion platform is configured as a member which can move transversely relative to the support platform 30; and at least a portion of the laser machining assembly 40 is provided on the optical path motion platform (not shown in the figures).

Through providing the optical path motion platform and providing the laser machining assembly 40 on the optical path motion platform, most of the parts of the laser machining assembly 40 can be made to move integrally, and therefore the possibility of damaging the parts such as the laser optical path 42 due to the dragging during the movement is reduced, and the use reliability of the platemaking apparatus 100 using laser engraving is improved.

A portion of the laser light source 41 and the laser optical path 42 is provided on the optical path motion platform.

Through providing a portion of the laser light source 41 and the laser optical path 42 on the optical path motion platform, the laser machining assembly 40 can move integrally, and then the stretching and retracting of the laser optical path 42 are reduced, to lower the possibility of the damage of the laser optical path 42 and then improve the use reliability of the platemaking apparatus 100 using laser engraving.

As shown in FIG. 1, the laser optical path 42 is provided with an optical path member 423; and the optical path member 423 comprises a shaping device and may comprise at least one of a beam expanding and collimating device, a focus point adjusting device and a detecting device.

Through disposing the optical path member423, the laser beam can be adjusted, i.e., shaping, to improve the quality of the laser beam, and thus it can be adapted to a wider application environment. And the beam expanding and collimating device can compress the divergence angle of the laser; the shaping device can improve the beam quality of the laser, and the shaping device comprises a time shaping device and a space shaping device; through the design of laser energy distribution in time domain and space domain, an energy absorption and transmission and material phase transition process during the processing is regulated, thus achieving the effect of improving the processing efficiency, quality, accuracy and consistency; the focus point adjusting device can adjust the position of the focus point of the laser; the detecting device can achieve one or more of power detection, focus point detection and orientation detection of the laser.

In some embodiments, as shown in FIG. 1 and FIG. 3, the number of laser machining assemblies 40 is three.

Increasing the number of the laser machining assemblies 40 helps improve the speed and the efficiency of the laser platemaking. It is understandable that the larger the number of the laser machining assemblies 40 is, the more complex the control correspondingly is, and this easily affects the quality and accuracy of the laser platemaking. Through disposing the number of the laser machining assemblies 40 properly, on the basis of improving the efficiency of the laser platemaking, the processing consistency of a plurality of the laser machining assemblies 40 is ensured, and a plurality of the laser machining assemblies 40 are limited to work at the same time, to ensure the quality and accuracy of the processing. And the number of the laser machining assemblies 40 can be two, four or other numbers.

In some embodiments, as shown in FIG. 1 and FIG. 2, the platemaking apparatus 100 using laser engraving further comprises a dust sucking device 11, which comprises a dust sucking mouth, and the dust sucking mouth is provided in the XY motion platform 20, and the dust sucking device 11 is used for collecting gases and dust generated during laser engraving.

After absorbing the high energy of the laser, the surface temperature of the printing plate rises sharply, the materials on the surface of the printing plate are removed instantly; through disposing the dust sucking device 11, the gases and dust generated during laser engraving can be collected, to reduce the gas pollution to the environment, and meanwhile, the surface of the printing plate is cleaned, and this reduces the possibility that the dust falls on the printing plate or the engraved patterns, to prevent generating any unfavorable effect to the accuracy of the engraving.

In some embodiments, a refrigeration device is provided on the base 10, and an air outlet of the refrigeration device faces the XY motion platform 20, and is used for cooling the processing region of the printing plate. In addition, the processing residues on the printing plate are further reduced through blowing, to improve the effect of the dust sucking device.

The platemaking apparatus 100 using laser engraving provided by this embodiment comprises the refrigeration device, and the working range of the air outlet of the refrigeration device covers the processing region of the printing plate, and the printing plate can dissipate heat, to lower the surface temperature of the printing plate and thus reducing the unfavorable effect to the printing plate from the heat during the laser engraving.

In some embodiments, as shown in FIG. 1, a bearing table 21 is provided on the XY motion platform 20, and the bearing table 21 presents a plate shape; the XY motion platform 20 comprises an X-axis platform 22 and a Y-axis platform 23 which are connected to each other, and the transverse movement direction of the X-axis platform 22 is perpendicular to the transverse movement direction of the Y-axis platform 23; and one of the X-axis platform 22 and the Y-axis platform 23 is connected to the base 10, while the other one is connected to the bearing table 21. And the transverse movement direction of the X-axis platform 22 is left and right, while the transverse movement direction of the Y-axis platform 23 is forward and backward.

The plate shaped bearing table 21 can be disposed to bear a plate shaped printing plate, and the end surface of the bearing table 21 for bearing the printing plate matches the shape of the printing plate, and thus the printing plate can stick to the bearing table 21 flatly, and then the printing plate is more stable during laser engraving. Through providing the X-axis platform 22 and the Y-axis platform 23, the printing plate can move transversely along two directions perpendicular to each other. And through the transverse movement of the X-axis platform 20, the printing plate can adapt to the laser machining assembly 40 better, to ensure the working region corresponding to each laser machining assembly 40, and through the transverse movement of the Y-axis platform 23, the next working region in the printing plate can be moved below the laser machining assembly 40 after the laser machining assembly 40 completes processing the current working region. Thus, through the cooperation between the XY motion platform 20 and the laser machining assembly 40, the simultaneous processing of a plurality of the working regions can be accomplished, to ensure the consistency of the processing.

In a further embodiment, the bearing table 21 is detachably connected to the XY motion platform 20, and the bearing table 21 is a negative pressure adsorption bearing table 21 or a hollow bearing table 21.

According to the relative position of an image and text region and anon image and text region on the printing plate, the printing plate can be distinguished by a gravure plate, a relief plate, a silk-screen plate and the like; in the case that the printing plate is the gravure plate or the relief plate, the bearing table 21 can be disposed as the negative pressure adsorption bearing table 21, to perform negative pressure adsorption to the gravure plate or the relief plate, and the gravure plate or the relief plate is attached to the negative pressure adsorption bearing table 21, and the relative movement of the gravure plate or the relief plate is limited, the stability of the gravure plate or the relief plate during laser engraving is improved, and the engraving accuracy is improved. In the case that the printing plate is the silk-screen plate, the bearing table 21 can be disposed as a hollow bearing table 21, the silk-screen plate is embedded into the hollow bearing table 21, to improve the stability of the silk-screen plate during laser engraving, and further improve the engraving accuracy.

As shown in FIG. 2, the platemaking apparatus 100 using laser engraving further comprises a visual measuring system 50, the visual measuring system 50 comprises a three dimensional camera 51, and the three dimensional camera 51 faces the XY motion platform 20 and is used for detecting the printing plate.

The platemaking apparatus 100 using laser engraving provided in the present embodiment comprises the visual measuring system 50, the visual measuring system 50 comprises the three dimensional camera 51, and the three dimensional camera can perform detection to the working region of the printing plate, and thus, through acquiring a detection result, the movement of the XY motion platform 20 and a plurality of the laser machining assemblies 40 can be controlled more pertinently, to further improve the quality and the accuracy of laser engraving and improve the consistency between movement of the XY motion platform 20 and a plurality of the laser machining assemblies 40.

As shown in FIG. 4, the visual measuring system 50 further comprises a planar machine visual device 52 and a three dimensional measurement microscope device 53, and the planar machine visual device 52 is connected to the three dimensional camera 51 and is used for receiving the detection data of the three dimensional camera 51 before the laser engraving, to conduct three dimensional re-modeling for the printing plate according to the detection data; the planar machine visual device 52 is connected to the three dimensional camera 51, and used for receiving the detection data of the three dimensional camera 51 during laser engraving and after the completion of laser engraving, to conduct quality detection to the working region of the printing plate.

The visual measuring system 50 comprises the planar machine visual device 52 and the three dimensional measurement microscope device 53, the planar machine visual device 52 conducts a measurement to the size and the planeness of the full width of the printing plate, and sends the measurement data to a controller 200, and the controller 200 performs the three dimensional re-modeling for the printing plate according to the measurement data. Thus, the measurement data of the planar machine visual device 52 provides a sufficient data support for the transverse movement of the XY motion platform 20 and the movement of the laser machining assembly 40, to ensure the engraving accuracy. During the engraving and after the completion of the engraving, the three dimensional measurement microscope device 53 is used for detecting the quality of the working region that has been processed, for example, detecting the image and text accuracy, the engraving depth, the stitching accuracy of an engraving unit, and the like, and detecting the effect of the connection and combination of the patterns at the connections of respective units. Therefore, the parameter data such as the width and the depth of the patterns is detected through the three dimensional measurement microscope on line, this makes the three dimensional processing quality of the patterns meet the requirements of design parameters in a great extent, and improves the yield of the printing plate.

As shown in FIG. 1 and FIG. 2, a portal frame 12 is provided on the base 10, a second transverse movement assembly 13 is provided on the portal frame 12, the three dimensional camera 51 is connected to the portal frame 12 through the second transverse movement assembly 13, and the three dimensional camera 51 is positioned above the XY motion platform 20, and the second transverse movement assembly 13 comprises a camera X-axis guide rail 131 and a camera Z-axis guide rail 132 which is slidably connected to the camera X-axis guide rail 131. And the extending direction of the X-axis guide rail is left and right, and the extending direction of the Z-axis guide rail is upward and downward.

Through disposing the portal frame 12, the mounting position of the three dimensional camera 51 is above the XY motion platform 20, and thus the three dimensional camera 51 can perform a full width detection to the printing plate provided on the XY motion platform 20 from top to bottom. Meanwhile, through disposing the second transverse movement assembly 13, the three dimensional camera 51 can move to a corresponding working area. It is understandable that there can be a plurality of three dimensional cameras, which respectively correspond to the a plurality of the laser machining assemblies 40 one by one, to conduct the detection when the printing plate is processed by the laser machining assemblies 40, to improve the processing quality and accuracy of each laser machining assembly 40 and the consistency of a plurality of the laser machining assemblies 40, and further improve the stitching accuracy of a plurality of the working regions.

In order to achieve the normal movement of the three dimensional camera, the second X-axis driving mechanism and the second Z-axis driving mechanism which are in transmission connection with the three dimensional camera are provided, and are respectively used for driving the three dimensional camera to do reciprocating movement along the extending direction of the camera X-axis guide rail or the extending direction of the camera Z-axis guide rail.

The second X-axis driving mechanism comprises various power devices, transmitting devices and control devices which are related to by electromechanical common sense and can achieve the X direction movement, while is not limited to a linear motor, a servo motor and a screw nut. Likewise, the second Z-axis driving mechanism comprises various power devices, transmitting devices and control devices which are related to by electromechanical common sense and can achieve the Z direction movement, while is not limited to a linear motor, a servo motor and a screw nut.

Some embodiments of the present invention provide a control system, comprising the platemaking apparatus 100 using laser engraving of any of the above embodiments, a controller 200 and a multi-axis numerical control servo platform 300.

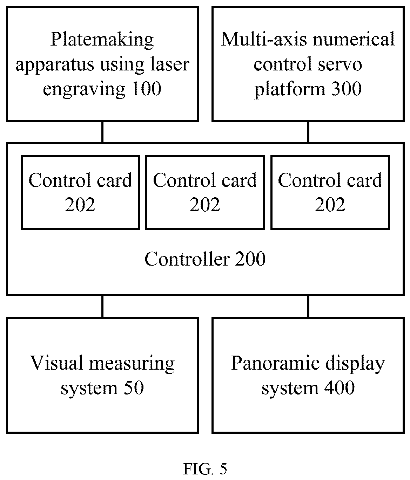

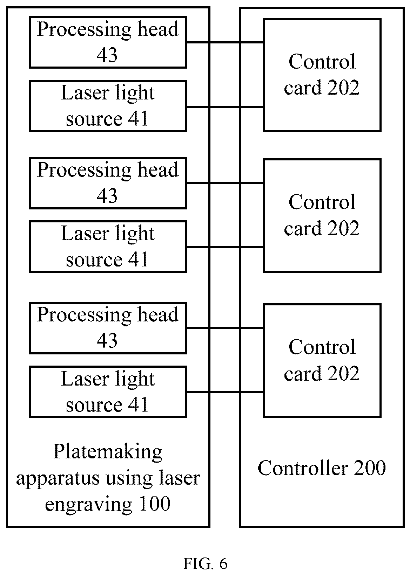

As shown in FIG. 5 and FIG. 6, the controller 200 comprises a plurality of control cards 202, and the plurality of control cards 202 are disposed on while correspond to a plurality of the laser machining assemblies 40 of the platemaking apparatus 100 using laser engraving, to limit a plurality of the laser machining assemblies 40 to work synchronously, The multi-axis numerical control servo platform 300 is connected to the controller 200, and used for receiving the control signal from the controller 200, and providing accurate positioning for the XY motion platform 20 of the platemaking apparatus 100 using laser engraving and for the laser engraving performed by the laser machining assemblies 40 of the platemaking apparatus 100 using laser engraving according to the control signal.

The control system provided by the present embodiment further comprises the controller 200 and the multi-axis numerical control servo platform 300; the controller 200 comprises a plurality of control cards 202, and a plurality of the control cards 202 are disposed corresponding to a plurality of the laser machining assemblies 40; as shown in FIG. 6, a plurality of the control cards 202 are respectively connected to the processing heads 43 of a plurality of the laser machining assemblies 40 and the laser light source 41. Therefore, a plurality of the laser machining assemblies 40 can be subjected to the same scheduling, and this further ensures the processing accuracy of a plurality of the laser machining assemblies 40 which perform laser engraving at the same time. And the controller 200 can be a computer. Meanwhile, through disposing the multi-axis numerical control servo platform 300, the movement of the XY motion platform 20 and the accurate positioning of the laser machining assemblies 40 can be achieved, and thus, the quality of the laser engraving is improved.

In a further embodiment, as shown in FIG. 5, the platemaking apparatus 100 using laser engraving comprises the visual measuring system 50, the visual measuring system 50 is connected to the controller 200, and the visual measuring system 50 can feed back the quality of laser engraving in real time, and the controller 200 can adjust dynamically according to the information fed back, and then the consistency of the effect of the laser engraving of a plurality of the laser machining assemblies 40 is improved, therefore, the controller 200 can complete the fast processing of pattern engraving through controlling the output power and the make-break of the laser machining assemblies 40.

In a further embodiment, as shown in FIG. 5, the control system further comprises a panoramic display system 400 which is connected to the controller 200 and is used for displaying the working state of the platemaking apparatus 100 using laser engraving.

The panoramic display system 400 can achieve the control and the state display of the platemaking apparatus 100 using laser engraving, and provides a user-friendly platform for operators to operate and monitor the platemaking work in real time, and the operators can know the working state of the platemaking apparatus 100 using laser engraving and the engraving state of the printing plate in real time, therefore, the operability of the control system is improved through improving the visualization of the control system.

Some embodiments of the present invention provide a platemaking method using laser engraving, which uses the platemaking apparatus 100 using laser engraving in any of the above embodiments.

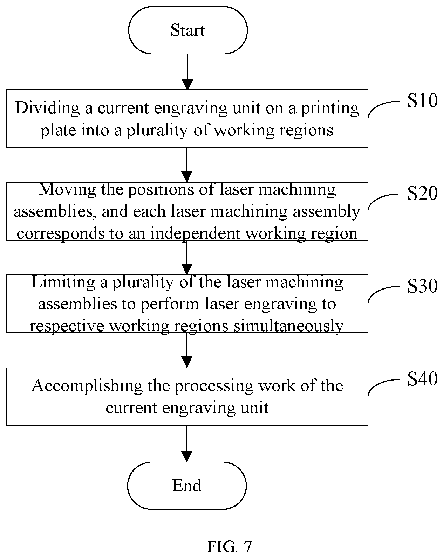

In some embodiments, as shown in FIG. 7, the platemaking method using laser engraving comprises: step S10, dividing a current engraving unit on a printing plate into a plurality of working regions; step S20, moving the positions of laser machining assemblies, and each laser machining assembly corresponds to an independent working region; step S30, limiting a plurality of the laser machining assemblies to perform laser engraving to respective working regions simultaneously; and step S40, accomplishing the processing work of the current engraving unit.

According to the platemaking method provided by the present embodiment, an engraving unit is divided into a plurality of working regions, and each laser machining assembly 40 is made to process a corresponding working region, and a plurality of the laser machining assemblies 40 can perform the laser engraving simultaneously, and work independently and do not interfere with each other. Thus, the processing speed of the laser engraving work can be improved, and thus the processing efficiency is improved. In addition, through disposing a plurality of the laser machining assemblies 40, the size of the width of the printing plate can further be increased correspondingly, and the printing plate to which the method is applied can have larger sizes of width and area.

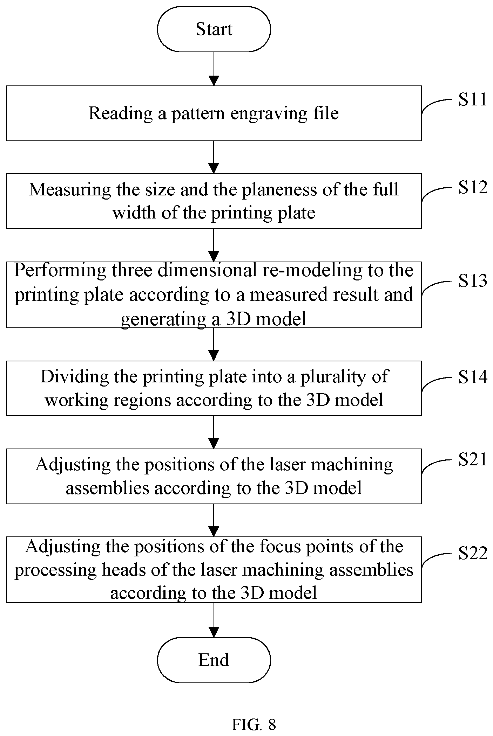

In some embodiments, as shown in FIG. 8, the step S10 comprises: step S11, reading a pattern engraving file; step S12, measuring the size and the planeness of the full width of the printing plate; step S13, performing three dimensional re-modeling to the printing plate according to a measured result and generating a 3D model; and step S 14, dividing the printing plate into a plurality of working regions according to the 3D model.

Through reading the pattern engraving file, based on image and text design information, the laser machining assemblies 40 can process corresponding image and text contents. Through measuring the size and the planeness of the full width of the printing plate, the three dimensional re-modeling is performed to the printing plate by using measured data, and through constructing the 3D model, the processing region of each laser machining assembly 40 can be planned reasonably, and the laser machining assemblies 40 are moved to the corresponding positions, and this helps improve the engraving accuracy.

In some embodiments, as shown in FIG. 8, the step S20 comprises: step S21, adjusting the positions of the laser machining assemblies according to the 3D model; and step S22, adjusting the positions of the focus points of the processing heads of the laser machining assemblies according to the 3D model.

Adjusting the positions of the laser machining assemblies 40 according to the 3D model and adjusting the positions of the focus points of the processing heads 43 of the laser machining assemblies 40 according to the 3D model render that the image and text contents to be processed fall into the corresponding working regions, and the image and text contents of different working regions can be interconnected, to ensure the completeness and accuracy of the image and text contents. It is understandable that the working regions can indicate a plurality of working regions in the same engraving unit, and can further indicate a plurality of working regions of two adjacent engraving units.

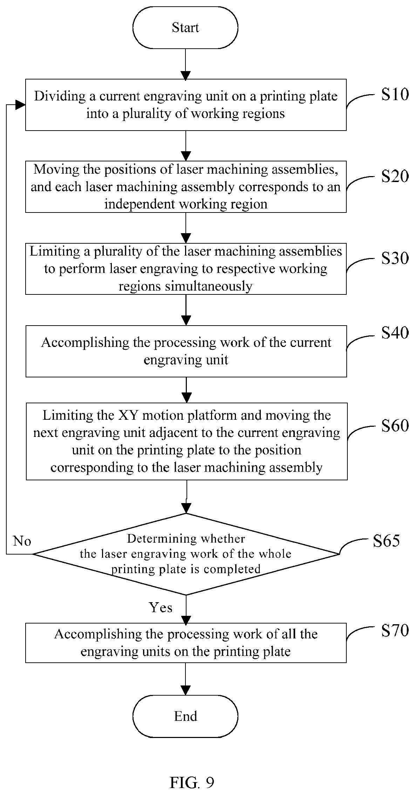

In some embodiments, as shown in FIG. 9, after the step S40, it comprises: step S60, limiting the XY motion platform and moving the next engraving unit adjacent to the current engraving unit on the printing plate to the position corresponding to the laser machining assembly; returning to perform the step S10; and step S70, accomplishing the processing work of all the engraving units on the printing plate.

The printing plate is divided into a plurality of engraving units, and the engraving units are subjected to laser engraving successively, and after the processing of one engraving unit is accomplished, the printing plate is moved through the XY motion platform 20, to perform laser engraving to the next engraving unit. Through repeating the above steps, the processing work of the whole printing plate is accomplished, and through dividing each engraving unit into a plurality of working regions, the laser machining assemblies 40 perform laser engraving continuously and uninterruptedly, and thus the processing efficiency is improved.

In some other embodiments, after the step S40, the method further comprises: step S65, determining whether the laser engraving work of the whole printing plate is completed; executing step S70if it is determined that the laser engraving work of the whole printing plate is completed, and returning to execute step S10if it is determined that the laser engraving work of the whole printing plate is not completed.

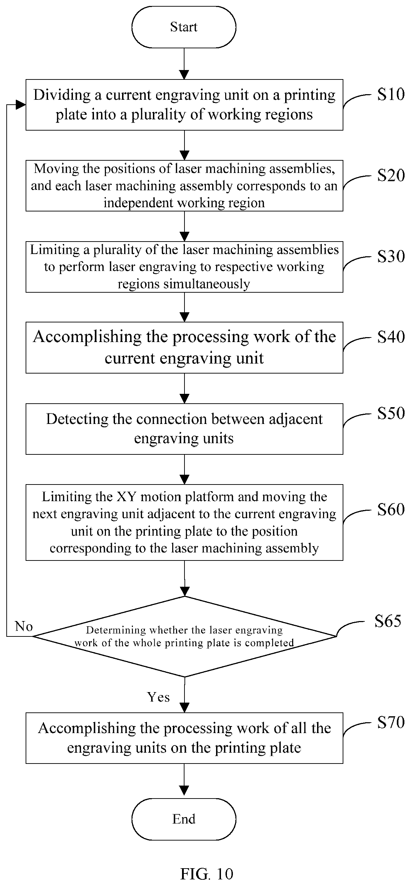

In some embodiments, as shown in FIG. 10, after the stepS40, it comprises: step S50, detecting the connection between adjacent engraving units.

After the laser engraving work of two adjacent engraving units is accomplished, through detecting the connection between the adjacent engraving units, it helps ensure the completeness and accuracy of the image and text contents, and further ensure the accuracy and quality of the processing, to improve the yield of the printing plate.

In some other embodiments, if it is detected that the connection between adjacent engraving units is good, the step S60 is executed, if it is detected that the connection between adjacent engraving units has a problem, the program is terminated.

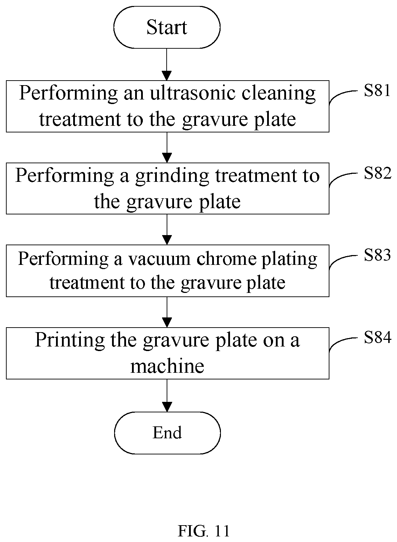

In some embodiments, as shown in FIG. 11, the printing plate is a gravure plate, after the step S70, it further comprises: step S81, performing an ultrasonic cleaning treatment to the gravure plate; step S82, performing a grinding treatment to the gravure plate; step S83, performing a vacuum chrome plating treatment to the gravure plate; and step S84, printing the gravure plate on a machine.

The platemaking method using laser engraving provided in the present embodiment cancels the links of acid pickling, electroforming, electroplating and the like that cause significant environmental pollution, and helps solve the problem of severe pollution in related art.

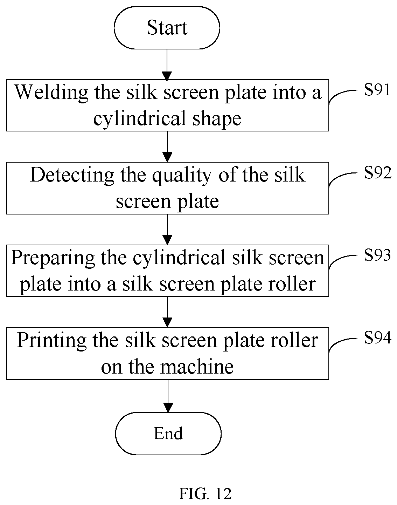

In some embodiments, as shown in FIG. 12, the printing plate is a silk screen plate, after the step S70, it further comprises: step S91, welding the silk screen plate into a cylindrical shape; step S92, detecting the quality of the silk screen plate; step S93, preparing the cylindrical silk screen plate into a silk screen plate roller; and step S94, printing the silk screen plate roller on the machine.

The platemaking method using laser engraving provided in the present embodiment cancels the links of electroforming and the like that cause significant environmental pollution, and helps solve the problem of severe pollution in related art.

Some embodiments of the present invention provide a computer-readable storage medium, a control program is stored in the computer-readable storage medium, and the control program, when executed by a processor, achieves the platemaking method using laser engraving of any of the embodiments.

It is understandable for a person skilled in the art that the embodiments of the present invention can provide a method, an apparatus or a computer program product. Therefore, the present invention can adopt wholly hardware embodiments, wholly software embodiments, or embodiments combining hardware with software. In addition, the present invention can adopt a form of a computer program product that is implemented on one or more computer available storage mediums (comprising, while are not limited to, a magnetic disk memory, a CD-ROM, an optical memory and the like) which comprise computer available program codes.

The present invention is described by referring to the flow chart and/or block diagram of the method, apparatus (system) and the computer program product according to the embodiments of the present invention. It should be understood that each flow and/or block in the flow charts and/or block diagrams, and the combination of each flow and/or block in the flow charts and/or the block diagrams can be achieved through computer program instructions. The computer program instructions can be provided to a universal computer, a special computer, an embedded processor or the processors of other programmable data processing devices to produce a machine, and the instructions executed by the computers or the processors of other programmable data processing devices produce a device for achieving the functions designated in one or a plurality of flows in the flow charts and/or in one or a plurality of blocks in the block diagrams.

These computer program instructions can further be stored in a computer-readable storage which can guide the computer or other programmable data processing apparatuses to work in a special method, and the instructions stored in the computer-readable storage produce a manufactured product comprising an instruction device, and the instruction device is configured to achieve the function designated in one or a plurality of flows in a flow chart and/or one or a plurality of blocks in a block diagram.

These computer program instructions can further be loaded on the computer or other programmable data processing apparatuses, and a series of operating steps are executed in the computer or other programmable apparatuses to produce a treatment realized by the computer, and thus, the instructions executed in the computer or other programmable apparatuses provide the steps for achieving the functions designated in one or a plurality of flows in the flow chart and/or one or a plurality of blocks in the block diagram.

A specific embodiment in the following is configured to describe the platemaking apparatus 100 using laser engraving, the control system, the platemaking method using laser engraving and the computer-readable storage medium provided in the present invention.

Currently, a technology of using laser to directly engrave a metal gravure plate and a screen plate is a direction of the development of the plate making technology in the banknote printing industry, and compared with traditional processes of gravure original plate, nickel gravure printing plate and plate making using electroplating, a traditional plate making process of burning plate and eroding multi-layer metal plates, an electroformed screen process, etc., engraving a banknote gravure plate and a screen plate using laser directly can improve not only the fine degree of the pattern of a printing plate, but also the anti-counterfeiting ability of products, and a direct engraving machine plate also conforms to environmental policies, and embodies the idea of sustainable development.

In the technology of directly engraving a silk-screen plate using laser, currently there is only the application of engraving a resin layer home and abroad, and there is still not any mature technology of directly engraving a metal silk-screen plate. And international technical systems of engraving a gravure plate using laser directly are mainly a CTiP system of a KBA-Notasys corporation, an FIT 2^{nd} Generation system of a G&D corporation and a DLE system of a Jura corporation, and the three engraving systems differ from each other in aspects such as engraving methods and plate materials, and the CTiP system which is internationally used the most widely uses a resin plate for laser engraving, and can only make the gravure original plate, in view of the characteristics of resin materials, the original plate can only be used once. The FIT 2^{nd} Generation system is mainly a gravure original plate engraving technology of combining a machine engraving with a laser engraving, and its plate making efficiency is improved to a certain extent compared with pure laser engraving. The DLE system is a technology of engraving a copper alloy plate using laser, and can make the gravure original plate or a machine printing plate, while its printability is not high for the machine printing plate, and it is not suitable for an application for a large print run of banknotes. The three gravure plate making systems are mainly used in making the gravure original plate, and then make the plate for the printing plate through a way of electroplating and casting, while a Romanian banknote printing factory uses the DLE system and a vacuum chromium plating technology to make a direct engraving machine gravure printing plate, and this embodies the development idea of green plate making while can only meet the need of a small print run.

To sum up, current technical systems using laser to directly engrave a gravure plate mainly have the following problems and defects: (1) the existing systems are mainly used for making the gravure original plate, even if some of them can be used for machine printing plates, their printability is not high and are not suitable for an application for a large print run of banknotes. (2) The existing systems can not cancel the links of electroforming, electroplating, acid pickling and the like that cause significant environmental pollution during the subsequent platemaking. (3) The materials that can be engraved by the existing systems have limitations, and only comprise a resin plate, a brass alloy plate, etc. (4) The existing systems have a relatively low engraving efficiency. (5) The laser device adopted by the existing systems is a picosecond laser device, and has a relatively large heat affected zone during metal etching, and thus affects the processing quality, and the processed printing plate must go through treatments such as acid pickling.

Thus, on the basis of studying the principles of directly engraving metal gravure plates and silk-screen plates using ultrafast laser, the present invention developed a multifunctional device based homemade banknote laser direct engraving platemaking system, which can produce the gravure original plate, the gravure plate and the silk-screen plate that meet the technical requirements of platemaking and printing; compared with imported apparatuses, it has made a significant progress in device design, the processing efficiency and quality of ultrafast laser engraving, the material adaptability of the printing plate and quality control, and it promotes the technical level of the anti-counterfeiting of engraving gravure plates and silk-screen plates.

FIG. 1 shows a three dimensional diagram of a multi-functional platform type platemaking apparatus 100 using laser engraving; FIG. 2 shows a side view of the multi-functional platform type platemaking apparatus 100 using laser engraving. The entirety of the multi-functional platform type platemaking apparatus 100 using laser engraving is constituted by a laser engraving hardware system, a pattern forming control software system, a printing plate (a special plate material) and the like.

The laser engraving hardware system comprises a plurality of sets of laser light sources, for example, an ultrafast laser device, a scanning galvanometer 431 and a detecting camera, and for example, a unit camera, the XY motion platform and the like. The base 10 located on the bottom portion can choose a marble base, the left side and the right side of the marble base are respectively provided with a marble support block and the support platforms 30 above the two support blocks. The laser machining assemblies 40 are provided on the support platforms 30. The laser machining assemblies 40 comprise the following structures: at least three laser light sources 41 (FIG. 1 shows three laser light sources 41, but the number of the laser light sources 41 is not limited to three, and can further be other numbers) and a laser optical path 42 are provided on the upper surface of the support platforms 30, the optical path member423 on the laser optical path 42 is downward vertically along one side of the support platforms 31 and connects the scanning galvanometer 431 and the field flattening lens 432. The scanning galvanometer 431 faces the plate for engraving, can move along the X-axis and can further move along the Z-axis. The distances among a plurality of galvanometers can be adjusted by the driving of a motor, and when the full width of a page is composed of a plurality of identical image and text regions, a plurality of sets of galvanometers can be placed, and the distances among a plurality of the galvanometers can be adjusted to be suitable for different distances.

On one side of the processing head 43 (it is also called a laser head), a dust sucking device 11 is further provided for collecting various gases and dust during the engraving.

The optical path member423 comprises a space time shaping device which comprises a time shaping device and a space shaping device added in the system of the laser optical path 42; through designing the distribution of the energy of the ultrafast laser in time domain and space domain, the energy absorption and transmission and material phase transition process during the processing is regulated, to improve the efficiency, quality, accuracy and consistency of the processing.

Two parallel guide rails are disposed between the two support blocks on the upper surface of the marble base. The XY motion platform 20 that can slide along the guide rail is provided between two guide rails, and the XY motion platform 20 has a platform X-axis and a platform Y-axis. The XY motion platform 20 can move in the X-axis direction and in the Y-axis direction; the bearing table 21 is placed on the XY motion platform 20, and the gravure original plate, the machine gravure plate (a gravure printing plate) and the silk-screen plate for engraving can be placed on the bearing table 21. When the gravure original plate and the machine gravure plate (a gravure printing plate) are engraved, the bearing table 21 is a negative pressure adsorption bearing table 21, and the scanning galvanometer 431 is chosen as the galvanometer, and the galvanometer is a bi-axial galvanometer or a tri-axial galvanometer; when the silk-screen plate is engraved, the bearing table 21 is replaced by a hollow bearing table 21, a special clamp for the silk-screen plate is placed on the bearing table, and the galvanometer is converted to a quadri-axial, a penta-axial or an octa-axial rotary cutting galvanometer.

The portal frame 12 is provided on the base 10, the detecting camera is provided on the side of the portal frame 12 close to the laser machining assembly 40, and the detecting camera (for example a three dimensional camera 51) can move along the X-axis guide rail 131 and the camera Z-axis guide rail 132. It is different from the method in the related art that the detecting apparatus is placed on the laser head and moves along the laser head portion, while the detecting camera in the present embodiment is disposed departing from the laser head, can move independently, has a large scanning and detecting range, and can better help accomplish the stitching of three galvanometer regions (in some circumstances, the galvanometer region is a working region); meanwhile, it is not affected by the action of the galvanometer of the laser head, and thus the scanning and the detection are more stable.

The laser light source 41 chooses an ultrafast laser device (femtosecond), and the ultrafast laser and a long pulse laser are essentially different in metal processing mechanism, the processing mechanism of the long pulse laser is mainly to convert energy into heat energy, and an etching purpose is achieved through the melting and evaporating of a metal; during the processing, the heat affected zone is relatively large, the defects of a recast layer, surface debris and the like will be produced; the ultrafast laser mainly utilize nonlinear effects such as avalanche ionization or multiphoton ionization to instantly remove metal materials without a melting process, therefore the heat affected zone is relatively small, and the processing quality of the metal is high. In addition, according to the processing mechanism, the long pulse laser has selectivity for processing objects, for example, brass alloys are easily processed, while the stainless steel or nickel are not easily processed, i.e., the processing efficiency is low, while the ultrafast laser does not have this problem.

The present embodiment further provides a control system of a multi-functional platform type platemaking apparatus using laser engraving, comprising: a real-time master control computer, a multi-axis numerical control servo platform 300, a panoramic display system 400, a visual measuring system 50 and laser machining assemblies 40. And the real-time master control computer is the core of the system, and completes functions such as moving a mobile platform, adjusting and starting and stopping a laser power, collecting and processing visual detection data, and operating devices and displaying state information; the multi-axis numerical control servo platform 300 completes the lifting-lowering control of the XY motion platform and a plurality of paths of laser emitting units, and provides accurate positioning for the engraving of laser machining assemblies 40; the panoramic display system 400 realizes the control and state display of the whole machine apparatus, and provides a user-friendly platform for the operator to operate and monitor the working of the system in real time; the visual measuring system 50completes the process inspection of the quality of laser engraving, and feeds back the processing quality in real-time, enables the real-time master control computer to conduct dynamical adjustment, and ensures the consistency of the effects of laser engraving; the laser machining assemblies 40 are the implementation units of laser engraving, realizes the trajectory path sent by the master control computer by controlling the output power and make-brake of the laser device, and accomplishes the rapid processing of the pattern.

All of the control cards 202 of a laser scanning head galvanometer are scheduled unitedly by the real-time master control computer platform, to ensure the simultaneous processing accuracy of a plurality of laser system units. The real-time master control computer adopts a high-performance multi-core control unit, uses a real-time control system, and adopts a high-speed real-time bus, synchronously controls the starting and stopping, power adjustment and information feedback of each laser galvanometer scanning head, and ensures the synchronization of the processing of a plurality of the laser system units, and the processing accuracy of each path of laser maintains consistent.

A plurality of the laser devices are completely different from the related art of converting one laser beam into a plurality of the paths of laser. The conversion of one laser beam into a plurality of paths of laser shares and consumes the energy of the laser beam, and it is further impossible to engrave different patterns in the same plate of a large width, let alone the issue of regional stitching consistency. Furthermore, the problem of the processing efficiency can further be solved through disposing a plurality of lasers.

The related art adopts the method for a single path of laser combined with the galvanometer, and when the position and the energy calibration need to be conducted during the processing, it is only necessary to consider the front and past consistency on a single path of time axis, and the platemaking apparatus 100 using laser engraving provided by this embodiment should consider not only the consistency on the time axis, but also the consistency between different paths at the same time. The embodiment that solves the consistency problem is mainly embodied in the improvement of the control system, which is specifically as follows: the improved control system is mainly composed of a controller 200, for example, the real-time master control computer, the multi-axis numerical control servo platform 300, the panoramic display system 400, the visual measuring system 50 and the laser machining assemblies 40.

And the real-time master control computer is the core of the system, and completes functions such as moving a mobile platform, adjusting and starting and stopping a laser power, collecting and processing visual detection data, and operating devices and displaying state information. The multi-axis numerical control servo platform 300 completes the lifting-lowering control of the XY motion platform 20 and a plurality of the paths of laser emitting units, and provides accurate positioning for the engraving of laser machining assemblies 40. The panoramic display system 400 realizes the control and state display of the whole machine apparatus, and provides a user-friendly platform for the operators to operate and monitor the working of the system in real time. The visual measuring system 50 completes the process inspection of the quality of laser engraving, and feeds back the processing quality in real-time, enables the real-time master control computer to conduct dynamical adjustment, and ensures the consistency of the effects of laser engraving. The laser machining assemblies 40 are the implementation units of laser engraving, realizes the trajectory path sent by the master control computer by controlling the output power and make-brake of the laser device, and accomplishes the rapid processing of the pattern.

In order to ensure the simultaneous processing accuracy of a plurality of the laser machining assemblies 40,all of the control cards 202 of a laser scanning head galvanometer are scheduled unitedly by the real-time master control computer platform. The real-time master control computer adopts a high-performance multi-core control unit, uses a real-time control system, and adopts a high-speed real-time bus, synchronously controls the starting and stopping, power adjustment and information feedback of each laser galvanometer scanning head, and ensures the synchronization of the processing of a plurality of the laser machining assemblies 40, and the processing accuracy of each path of laser maintains consistent.

The gravure plate engraving is taken as an example to describe in details the platemaking method using laser engraving, and the engraving process is provided as follows:

before engraving, the master control computer, which is briefly called the computer, limits the three dimensional camera to move along the X-axis guide rail 131 and the Z-axis guide rail 132, and limits the XY motion platform to move along the platform X-axis and the platform Y-axis; the planar machine visual detection camera device is configured to detect the size and the planeness of the full width of the gravure plate, and the computer uses the detected data to perform the three dimensional re-modeling to the gravure. The computer limits a plurality of sets of scanning galvanometers 431 to move on the processing head X-axis guide rail, to be adaptive to a preset plate size and the distance size between adjacent scanning galvanometers 431.

The engraving process is provided as follows: the computer reads the pattern engraving file, and based on image and text design information, simultaneously limits the output pulse of the plurality of the laser devices to ablate the metal plate material. After absorbing the high energy of the laser, the surface temperature of the metal plate material rises sharply, the materials on the surface of the printing plate are removed instantly, to form the engraved patterns. In the engraving process, the dust sucking device 11 is configured to collect various gases and dust. Due to the limiting of the field flattening lens 432, the area of the maximum processing region of each galvanometer is 60mm×60mm, and the region is set to be a working region. Each scanning galvanometer 431 has its own Z-axis, and during the processing, it can be controlled by the computer to conduct accurate and minute adjustment to the position of the focus point, and the minute adjustment data are calculated by the three dimensional re-modeling of the gravure plate before engraving.

After each galvanometer has accomplished the processing of its own working region, the computer limits the XY motion platform 20 to move the gravure plate to the next while adjacent engraving unit, and after the platform reaches the potion and becomes stable, then the computer limits to conduct laser engraving, the above processes are repeated until all the image and text regions of the gravure plate are processed.

During the engraving and after the completion of the engraving, the computer limits a detecting camera to detect the platform X-axis and the platform Z-axis of the visual measuring system 50, and thus finishes the positioning, and the three dimensional detecting camera measurement microscope is configured to conduct quality inspection to the regions which are engraved, for example, inspecting the image and text accuracy, the engraving depth, the stitching accuracy of the engraving units and the like; the optical system of the three dimensional camera 51 is configured to detect the effect of the connection and combination of the image and text at the connections of respective units, to engrave the gravure printing plate that meets requirements.

Thus, the platemaking apparatus 100 using laser engraving, the control system and the platemaking method provided by the present embodiment at least have the following advantages:
1) the system adopts an ultrafast laser device (femtosecond) to solve the problems that the long pulse laser engraving has selectivity for the processed plate material, and has a low processing efficiency and severe pollution.
2) A plurality of laser devices are adopted, through the control system, the consistency of the time axis is achieved, the consistency of different paths at the same time is achieved, and the accuracy and efficiency are improved greatly.
3) When the engraved pattern is changed, for example, when the distance between the working regions corresponding to the laser machining assemblies 40 changes, the computer can be configured to limit the motor to automatically adjust the distance between the galvanometers, to quickly adapt to the pattern requirements, reduce the stopping time and improve the production efficiency.
4) A time shaping device and a space shaping device are added into the system of the laser optical path 42, through concertedly regulating the energy distribution of the laser in time domain and space domain and the material state/properties, the process of a photon-electron interaction is regulated to regulate the dynamics of an instantaneous nanoscale electron (density, temperature, excited state distribution, etc.), to regulate the local instantaneous characteristics of the material (optical and thermodynamic characteristics, etc.), and thus regulate the processes such as material phase transition, and improve the processing efficiency, quality, accuracy, and consistency.
5) A set of visual measuring system 50 composed of a planar machine visual device 52 and the three dimensional measurement microscope device 53 are provided in the platemaking apparatus 100 using laser engraving, to ensure that the laser engraving meets the requirements of process and technology. Firstly, through planar machine vision and a three dimensional measurement microscope, automatic laser head offset calibration, engraving area calibration, engraving depth calibration and laser device focus point calibration, etc. are achieved, and whether laser processing parameters meet process requirements is verified. Secondly, during the engraving and after the completion of the engraving, parameter data of the pattern such as the width and depth are detected online through the three-dimensional measurement microscope, and the quality of laser engraving is monitored online to determine whether the three dimensional processing quality of the pattern meets the requirements of design parameters.
6) The developed platemaking apparatus can not only engrave the gravure original plate, but further directly engrave nickel or stainless steel machine gravure plate and silk-screen plate that meets the requirements of platemaking and printing technologies.
7) The existing process route is improved, the electroplating or electroforming link is canceled, and the green platemaking is truly achieved.

For the gravure printing plate, the existing process route for making gravure printing plate is as follows: DLE laser engraving→ ultrasonic cleaning→ acid pickling treatment→ casting nickel relief plate → casting nickel gravure plate → grinding plate→electroplating chromium→ printing on the machine; the improved platemaking process of the gravure plate is as follows: engraving gravure plate using laser→ ultrasonic cleaning→grinding plate→ vacuum chrome plating→ printing on the machine, and the links that cause significant environmental pollution such as acid pickling, electroforming, and electroplating are canceled.

For the silk-screen plate, the existing process route for making the silk-screen plate is as follows: electroforming a seamless cylindrical screen plate→ coating adhesive on double sides→ engraving the adhesive layer on the surface of the screen plate using laser → inspecting quality → making a silk-screen plate roller → printing on the machine; and the improved platemaking process of the silk-screen plate is as follows: engraving a flat silk-screen plate using laser→ welding it into a cylindrical shape→ inspecting quality→ making the silk-screen plate roller→ printing on the machine, and the electroforming process is canceled.

The methodologies described herein may be implemented by various means depending upon applications according to particular features and/or examples. For example, such methodologies may be implemented in hardware, firmware, and/or combinations thereof, along with software. In a hardware implementation, for example, a processor may be implemented within one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, electronic devices, other devices units designed to perform the functions described herein, and/or combinations thereof.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media, or electrical signals transmitted through a wire.

## Claims

1. A platemaking apparatus for laser engraving (100) comprising:
a base (10);
an XY motion platform (20) arranged on the base (10) to move transversely and used for bearing a printing plate;
a support platform (30) disposed on the base (10), wherein a movement space is provided between the support platform (30) and the base (10) and allows for the transverse movement of the XY motion platform (20);
a plurality of the laser machining assemblies (40), the laser machining assemblies (40) are connected to the support platform (30), and at least a portion of the laser machining assemblies (40) are adapted to move relative to the support platform (30) and are configured to perform laser engraving on the printing plate;
wherein each one of the laser machining assemblies (40) comprises:
a laser light source (41) provided on the support platform (30) and used for emitting laser;
a laser optical path (42) connected to the laser light source (41) and used for transmitting the laser; and
a processing head (43) located above the XY motion platform (20) and connected to the laser optical path (42), wherein the processing head (43) is adapted to move relative to the support platform (30), and is provided corresponding to the printing plate to conduct laser engraving;
**characterised in that** the platemaking apparatus for laser engraving (100) further comprises:
a visual measuring system (50) comprising a three dimensional camera (51), wherein the three dimensional camera (51) faces the XY motion platform (20) and is used for detecting the printing plate;
the visual measuring system (50) further comprises a planar machine visual device (52) and a three dimensional measurement microscope device (53),
wherein, the planar machine visual device (52) is connected to the three dimensional camera (51) and is used for receiving the detection data of the three dimensional camera (51) before the laser engraving to conduct three dimensional re-modeling for the printing plate according to the detection data;
the planar machine visual device (52) is connected to the three dimensional camera (51), and is used for receiving the detection data of the three dimensional camera (51) during laser engraving and after the completion of laser engraving to conduct quality detection to the working region of the printing plate;
the laser light source (41) comprises a femtosecond laser device;
the laser optical path (42) is provided with an optical path member (423);
the optical path member (423) comprises at least one of a space shaping device and a time shaping device;
the top wall of the support platform (30) is provided with an optical path motion platform, at least a portion of the laser optical path (42) is provided on the optical path motion platform, and the optical path motion platform is configured as a member which is able to move transversely relative to the support platform (30); and
at least a portion of the laser machining assembly (40) is provided on the optical path motion platform;
a portal frame (12) is provided on the base (10), a second transverse movement assembly (13) is provided on the portal frame (12), the three dimensional camera (51) is connected to the portal frame (12) through the second transverse movement assembly (13), and the three dimensional camera (51) is positioned above the XY motion platform (20), and the second transverse movement assembly (13) comprises: a camera X-axis guide rail (131) and a camera Z-axis guide rail (132) which is slidably connected to the camera X-axis guide rail (131), wherein the extending direction of the camera X-axis guide rail (131) is perpendicular to the extending direction of the camera Z-axis guide rail (132);
a second X-axis driving mechanism in transmission connection with the three dimensional camera (51), wherein the second X-axis driving mechanism is configured to drive the three dimensional camera (51) to do reciprocating movement along the extending direction of the camera X-axis guide rail (131); and
a second Z-axis driving mechanism in transmission connection with the three dimensional camera (51), wherein the second Z-axis driving mechanism is configured to drive the three dimensional camera (51) to do reciprocating movement along the extending direction of the camera Z-axis guide rail (132).

2. The platemaking apparatus (100) according to claim 1, wherein the support platform (30) is provided with a first transverse movement assembly (31), and the processing head (43) is connected to the first transverse movement assembly (31);
the first transverse movement assembly (31) comprises a processing head X-axis guide rail (311) and a first X-axis driving mechanism, the first X-axis driving mechanism is in transmission connection with the processing head (43), and the first X-axis driving mechanism is configured to drive the processing head (43) to do reciprocating movement along the extending direction of the processing head X-axis guide rail (311), wherein the extending direction of the processing head X-axis guide rail (311) is parallel to the plane where the XY motion platform (20) is located.

3. The platemaking apparatus (100) according to claim 2, wherein
the first transverse movement assembly (31) comprises a processing head Z-axis guide rail (312) and a first Z-axis driving mechanism connected to the processing head X-axis guide rail (311), the first Z-axis driving mechanism is in transmission connection with the processing head (43), and the first Z-axis driving mechanism is configured to make the processing head (43) do reciprocating movement along the extending direction of the processing head Z-axis guide rail (312);
one of the processing head X-axis guide rail (311) and the processing head Z-axis guide rail (312) is connected to the support platform (30), and the other one is connected to the processing head (43), wherein the extending direction of the processing head Z-axis guide rail (312) is perpendicular to the plane where the XY motion platform (20) is located.

4. The platemaking apparatus (100) according to claim 1, wherein the processing head (43) comprises one of a scanning galvanometer (431), a rotary cutting galvanometer, a multi-prism rotating mirror and a modulator.

5. The platemaking apparatus (100) according to claim 1, wherein
the processing head (43) comprises a scanning galvanometer (431) and a field flattening lens (432), the scanning galvanometer (431) is connected to the laser optical path (42), and the field flattening lens (432) is connected to the scanning galvanometer (431) and is provided below the scanning galvanometer (431) and configured to limit the processing region of the scanning galvanometer (431).

6. The platemaking apparatus (100) according to any of claims 2 to 5, wherein
the laser optical path (42) is provided with a reflective lens (421), and the reflective lens (421) is provided at the transition point of the laser optical path (42) and is configured to change the transmission direction of a laser beam.

7. The platemaking apparatus (100) according to any of claims 1 to 6, wherein
the laser optical path (42) is provided with a telescopic optical path protection tube (422);
the optical path motion platform is provided with a reflective lens (421), the support platform (30) is provided with a corresponding reflective lens (421), and the telescopic optical path protection tube (422) is provided between two corresponding reflective lenses (421).

8. The platemaking apparatus (100) according to any of claims 1 to 6, wherein
a portion of the laser light source (41) and the laser optical path (42) is provided on the optical path motion platform.

9. The platemaking apparatus (100) according to any of claims 2 to 5, wherein
the optical path member (423) further comprises at least one of a beam expanding and collimating device, a dynamic focus point adjusting device and a detecting device.

10. The platemaking apparatus (100) according to any of claims 1 to 5, wherein
the number of the laser machining assemblies (40) is three.

11. The platemaking apparatus (100) according to any of claims 1 to 5, further comprising:
a dust sucking device (11) comprising a dust sucking mouth, wherein the dust sucking mouth is provided in the XY motion platform (20), and the dust sucking device (11) is used for collecting gases and dust generated during laser engraving.

12. The platemaking apparatus (100) according to any of claims 1 to 5, wherein
a refrigeration device is provided on the base (10), and an air outlet of the refrigeration device faces the XY motion platform (20) and is used for cooling the processing region of the printing plate.

13. The platemaking apparatus (100) according to any of claims 1 to 5. wherein
a bearing table (21) is provided on the XY motion platform (20), and the bearing table (21) presents a plate shape;
the XY motion platform (20) comprises an X-axis platform (22) and a Y-axis platform (23), which are connected to each other, and the transverse movement direction of the X-axis platform (22) is perpendicular to the transverse movement direction of the Y-axis platform (23);
wherein one of the X-axis platform (22) and the Y-axis platform (23) is connected to the base (10), while the other one is connected to the bearing table (21).

14. The platemaking apparatus (100) according to claim 13, wherein
the bearing table (21) is detachably connected to the XY motion platform (20), and the bearing table (21) is a negative pressure adsorption bearing table or a hollow bearing table.

15. A control system comprising:
the platemaking apparatus (100) in any of claims 1 to 14:
a controller (200) comprising a plurality of control cards (202), wherein a plurality of the control cards (202) are disposed on while correspond to a plurality of the laser machining assemblies (40) of the platemaking apparatus using laser engraving (100) one by one to limit a plurality of the laser machining assemblies (40) to work synchronously;
a multi-axis numerical control servo platform (300) connected to the controller (200) and used for receiving a control signal sent from the controller (200) and providing accurate positioning for the XY motion platform (20) of the platemaking apparatus using laser engraving (100) and for the laser engraving performed by the laser machining assemblies (40) of the platemaking apparatus using laser engraving (100) according to the control signal.

16. The control system according to claim 15, further comprising:
a panoramic display system (400) connected to the controller (200) and used for displaying the working state of the platemaking apparatus using laser engraving (100).

17. A platemaking method for laser engraving using the platemaking apparatus for laser engraving (100) according to any of claims 1 to 14 comprises following steps:
dividing a current engraving unit on a printing plate into a plurality of working regions;
moving the positions of laser machining assemblies (40), and each laser machining assembly (40) corresponds to an independent working region;
limiting the plurality of laser machining assemblies (40) to perform laser engraving to respective working regions simultaneously; and
accomplishing the processing work of the current engraving unit.

18. The platemaking method according to claim 17, wherein the step of dividing a current engraving unit on a printing plate into a plurality of working regions comprises:
reading a pattern engraving file;
measuring the size and the planeness of the full width of the printing plate;
performing three dimensional re-modeling to the printing plate according to a measured result and generating a 3D model; and
dividing the printing plate into a plurality of working regions according to the 3D model.

19. The platemaking method according to claim 18, wherein the step of moving the positions of laser machining assemblies (40) comprises:
adjusting the positions of the laser machining assemblies (40) according to the 3D model; and
adjusting the positions of the focus points of the processing heads (43) of the laser machining assemblies (40) according to the 3D model.

20. The platemaking method according to any of claims 17 to 19, wherein after the step of accomplishing the processing work of the current engraving unit it comprises:
limiting the XY motion platform (20) and moving the next engraving unit adjacent to the current engraving unit on the printing plate to the position corresponding to the laser machining assembly (40);
returning to perform the step of dividing a current engraving unit on the printing plate into a plurality of working regions; and
accomplishing the processing work of all the engraving units on the printing plate.

21. The platemaking method according to claim 20, wherein after the step of accomplishing the processing work of the current engraving unit, it comprises:
detecting the connection between adjacent engraving units.

22. The platemaking method according to claim 20, wherein the printing plate is a gravure plate, after the step of accomplishing the processing work of all the engraving units on the printing plate, it further comprises:
performing an ultrasonic cleaning treatment to the gravure plate;
performing a grinding treatment to the gravure plate;
performing a chrome plating treatment to the gravure plate; and
printing the gravure plate on a machine.

23. The platemaking method according to claim 20, wherein the printing plate is a silk screen plate, after the step of accomplishing the processing work of all the engraving units on the printing plate, it further comprises:
welding the silk screen plate into a cylindrical shape;
detecting the quality of the silk screen plate;
preparing the cylindrical silk screen plate into a silk screen plate roller; and
printing the silk screen plate roller on the machine.

## Patentansprüche

1. Eine Plattenherstellungsvorrichtung zum Lasergravieren (100), umfassend:
eine Basis (10);
eine auf der Basis (10) angeordnete XY-Bewegungsplattform (20), um sich quer zu bewegen, und die zum Tragen einer Druckplatte verwendet wird;
eine auf der Basis (10) angeordnete Trägerplattform (30), wobei ein Bewegungsraum zwischen der Trägerplattform (30) und der Basis (10) vorgesehen ist und die Querbewegung der XY-Bewegungsplattform (20) ermöglicht;
eine Vielzahl von Laserbearbeitungsbaugruppen (40), wobei die Laserbearbeitungsbaugruppen (40) mit der Trägerplattform (30) verbunden sind, und mindestens ein Teil der Laserbearbeitungsbaugruppen (40) dazu angepasst ist, sich relativ zu der Trägerplattform (30) zu bewegen, und dazu eingerichtet ist, eine Lasergravur auf der Druckplatte durchzuführen;
wobei jede der Laserbearbeitungsbaugruppen (40) umfasst:
eine Laserlichtquelle (41), die auf der Trägerplattform (30) vorgesehen ist und zum Emittieren von Laser verwendet wird;
einen Laserlichtweg (42), der mit der Laserlichtquelle (41) verbunden ist und zum Übertragen des Lasers verwendet wird; und
einen Bearbeitungskopf (43), der oberhalb der XY-Bewegungsplattform (20) angeordnet und mit dem Laserlichtweg (42) verbunden ist, wobei der Bearbeitungskopf (43) dazu angepasst ist, sich relativ zu der Trägerplattform (30) zu bewegen, und entsprechend der Druckplatte vorgesehen ist, um eine Lasergravur durchzuführen;
**dadurch gekennzeichnet, dass** die Plattenherstellungsvorrichtung zum Lasergravieren (100) ferner umfasst:
ein visuelles Messsystem (50), umfassend eine dreidimensionale Kamera (51), wobei die dreidimensionale Kamera (51) der XY-Bewegungsplattform (20) zugewandt ist und zum Erfassen der Druckplatte verwendet wird;
das visuelle Messsystem (50) ferner eine planare Maschinenvisuallvorrichtung (52) und eine dreidimensionale Messmikroskopvorrichtung (53) umfasst,
wobei die planare Maschinenvisuallvorrichtung (52) mit der dreidimensionalen Kamera (51) verbunden ist und zum Empfangen der Erfassungsdaten der dreidimensionalen Kamera (51) vor der Lasergravur verwendet wird, um gemäß den Erfassungsdaten eine dreidimensionale Neumodellierung für die Druckplatte durchzuführen;
die planare Maschinenvisuallvorrichtung (52) mit der dreidimensionalen Kamera (51) verbunden ist und zum Empfangen der Erfassungsdaten der dreidimensionalen Kamera (51) verwendet wird, während der Lasergravur und nach dem Abschluss der Lasergravur, um eine Qualitätsprüfung an dem Arbeitsbereich der Druckplatte durchzuführen;
die Laserlichtquelle (41) eine Femtosekundenlaservorrichtung umfasst;
der Laserlichtweg (42) mit einem Lichtwegbauteil (423) versehen ist;
das Lichtwegbauteil (423) mindestens eines aus einer Raumformungsvorrichtung und einer Zeitformungsvorrichtung umfasst;
die obere Wand der Trägerplattform (30) mit einer Lichtweg-Bewegungsplattform versehen ist, wobei mindestens ein Teil des Laserlichtwegs (42) auf der Lichtweg-Bewegungsplattform vorgesehen ist, und die Lichtweg-Bewegungsplattform als ein Bauteil ausgebildet ist, das dazu fähig ist, sich quer relativ zu der Trägerplattform (30) zu bewegen; und
mindestens ein Teil der Laserbearbeitungsbaugruppe (40) auf der Lichtweg-Bewegungsplattform vorgesehen ist;
ein Portalrahmen (12) auf der Basis (10) vorgesehen ist, eine zweite Querbewegungsbaugruppe (13) auf dem Portalrahmen (12) vorgesehen ist, die dreidimensionale Kamera (51) über die zweite Querbewegungsbaugruppe (13) mit dem Portalrahmen (12) verbunden ist, und die dreidimensionale Kamera (51) oberhalb der XY-Bewegungsplattform (20) positioniert ist, und die zweite Querbewegungsbaugruppe (13) umfasst: eine Kamera-X-Achsen-Führungsschiene (131) und eine Kamera-Z-Achsen-Führungsschiene (132), die gleitbar mit der Kamera-X-Achsen-Führungsschiene (131) verbunden ist, wobei die Erstreckungsrichtung der Kamera-X-Achsen-Führungsschiene (131) senkrecht zu der Erstreckungsrichtung der Kamera-Z-Achsen-Führungsschiene (132) ist;
einen zweiten X-Achsen-Antriebsmechanismus, der in Antriebsverbindung mit der dreidimensionalen Kamera (51) steht, wobei der zweite X-Achsen-Antriebsmechanismus dazu eingerichtet ist, die dreidimensionale Kamera (51) zu einer Hin- und Herbewegung entlang der Erstreckungsrichtung der Kamera-X-Achsen-Führungsschiene (131) anzutreiben; und
einen zweiten Z-Achsen-Antriebsmechanismus, der in Antriebsverbindung mit der dreidimensionalen Kamera (51) steht, wobei der zweite Z-Achsen-Antriebsmechanismus dazu eingerichtet ist, die dreidimensionale Kamera (51) zu einer Hin- und Herbewegung entlang der Erstreckungsrichtung der Kamera-Z-Achsen-Führungsschiene (132) anzutreiben.

2. Die Plattenherstellungsvorrichtung (100) nach Anspruch 1, wobei die Trägerplattform (30) mit einer ersten Querbewegungsbaugruppe (31) versehen ist und der Bearbeitungskopf (43) mit der ersten Querbewegungsbaugruppe (31) verbunden ist;
die erste Querbewegungsbaugruppe (31) eine Bearbeitungskopf-X-Achsen-Führungsschiene (311) und einen ersten X-Achsen-Antriebsmechanismus umfasst, der erste X-Achsen-Antriebsmechanismus in Antriebsverbindung mit dem Bearbeitungskopf (43) steht und der erste X-Achsen-Antriebsmechanismus dazu eingerichtet ist, den Bearbeitungskopf (43) zu einer Hin- und Herbewegung entlang der Erstreckungsrichtung der Bearbeitungskopf-X-Achsen-Führungsschiene (311) anzutreiben, wobei die Erstreckungsrichtung der Bearbeitungskopf-X-Achsen-Führungsschiene (311) parallel zu der Ebene ist, in der sich die XY-Bewegungsplattform (20) befindet.

3. Die Plattenherstellungsvorrichtung (100) nach Anspruch 2, wobei die erste Querbewegungsbaugruppe (31) eine Bearbeitungskopf-Z-Achsen-Führungsschiene (312) und einen ersten Z-Achsen-Antriebsmechanismus umfasst, der mit der Bearbeitungskopf-X-Achsen-Führungsschiene (311) verbunden ist, wobei der erste Z-Achsen-Antriebsmechanismus in Antriebsverbindung mit dem Bearbeitungskopf (43) steht, und der erste Z-Achsen-Antriebsmechanismus dazu eingerichtet ist, den Bearbeitungskopf (43) zu einer Hin- und Herbewegung entlang der Erstreckungsrichtung der Bearbeitungskopf-Z-Achsen-Führungsschiene (312) zu veranlassen;
eine der Bearbeitungskopf-X-Achsen-Führungsschiene (311) und der Bearbeitungskopf-Z-Achsen-Führungsschiene (312) mit der Trägerplattform (30) verbunden ist, und die andere mit dem Bearbeitungskopf (43) verbunden ist, wobei die Erstreckungsrichtung der Bearbeitungskopf-Z-Achsen-Führungsschiene (312) senkrecht zu der Ebene ist, in der sich die XY-Bewegungsplattform (20) befindet.

4. Die Plattenherstellungsvorrichtung (100) nach Anspruch 1, wobei der Bearbeitungskopf (43) eines aus einem Scanning-Galvanometer (431), einem rotierenden Schneid-Galvanometer, einem rotierenden Mehrprismenspiegel und einem Modulator umfasst.

5. Die Plattenherstellungsvorrichtung (100) nach Anspruch 1, wobei der Bearbeitungskopf (43) ein Scanning-Galvanometer (431) und eine Feldnivellierungslinse (432) umfasst, das Scanning-Galvanometer (431) mit dem Laserlichtweg (42) verbunden ist, und die Feldnivellierungslinse (432) mit dem Scanning-Galvanometer (431) verbunden ist und unterhalb des Scanning-Galvanometers (431) vorgesehen und dazu eingerichtet ist, den Bearbeitungsbereich des Scanning-Galvanometers (431) zu begrenzen.

6. Die Plattenherstellungsvorrichtung (100) nach einem der Ansprüche 2 bis 5, wobei der Laserlichtweg (42) mit einer Reflexionslinse (421) versehen ist, und die Reflexionslinse (421) an dem Übergangspunkt des Laserlichtwegs (42) vorgesehen und dazu eingerichtet ist, die Übertragungsrichtung eines Laserstrahls zu ändern.

7. Die Plattenherstellungsvorrichtung (100) nach einem der Ansprüche 1 bis 6, wobei
der Laserlichtweg (42) mit einem teleskopischen Lichtweg-Schutzrohr (422) versehen ist;
die Lichtweg-Bewegungsplattform mit einer Reflexionslinse (421) versehen ist, die Trägerplattform (30) mit einer entsprechenden Reflexionslinse (421) versehen ist, und das teleskopische Lichtweg-Schutzrohr (422) zwischen den zwei entsprechenden Reflexionslinsen (421) vorgesehen ist.

8. Die Plattenherstellungsvorrichtung (100) nach einem der Ansprüche 1 bis 6, wobei ein Teil der Laserlichtquelle (41) und des Laserlichtwegs (42) auf der Lichtweg-Bewegungsplattform vorgesehen ist.

9. Die Plattenherstellungsvorrichtung (100) nach einem der Ansprüche 2 bis 5, wobei
das Lichtwegbauteil (423) ferner mindestens eines aus einer Strahlaufweitungs- und Kollimationsvorrichtung, einer Vorrichtung zur dynamischen Fokuspunkteinstellung und einer Erfassungsvorrichtung umfasst.

10. Die Plattenherstellungsvorrichtung (100) nach einem der Ansprüche 1 bis 5, wobei die Anzahl der Laserbearbeitungsbaugruppen (40) drei beträgt.

11. Die Plattenherstellungsvorrichtung (100) nach einem der Ansprüche 1 bis 5, ferner umfassend:
eine Staubabsaugvorrichtung (11), umfassend eine Staubabsaugöffnung, wobei die Staubabsaugöffnung in der XY-Bewegungsplattform (20) vorgesehen ist, und die Staubabsaugvorrichtung (11) zum Sammeln von Gasen und Staub verwendet wird, die während der Lasergravur erzeugt werden.

12. Die Plattenherstellungsvorrichtung (100) nach einem der Ansprüche 1 bis 5, wobei
eine Kühlvorrichtung auf der Basis (10) vorgesehen ist, und ein Luftauslass der Kühlvorrichtung der XY-Bewegungsplattform (20) zugewandt ist und zum Kühlen des Bearbeitungsbereichs der Druckplatte verwendet wird.

13. Die Plattenherstellungsvorrichtung (100) nach einem der Ansprüche 1 bis 5, wobei
ein Tragtisch (21) auf der XY-Bewegungsplattform (20) vorgesehen ist, und der Tragtisch (21) eine Plattenform aufweist;
die XY-Bewegungsplattform (20) eine X-Achsen-Plattform (22) und eine Y-Achsen-Plattform (23) umfasst, die miteinander verbunden sind, und die Querbewegungsrichtung der X-Achsen-Plattform (22) senkrecht zu der Querbewegungsrichtung der Y-Achsen-Plattform (23) ist;
wobei eine der X-Achsen-Plattform (22) und der Y-Achsen-Plattform (23) mit der Basis (10) verbunden ist, während die andere mit dem Tragtisch (21) verbunden ist.

14. Die Plattenherstellungsvorrichtung (100) nach Anspruch 13, wobei der Tragtisch (21) lösbar mit der XY-Bewegungsplattform (20) verbunden ist, und der Tragtisch (21) ein Unterdruck-Ansaug-Tragtisch oder ein hohler Tragtisch ist.

15. Ein Steuersystem, umfassend:
die Plattenherstellungsvorrichtung (100) nach einem der Ansprüche 1 bis 14; eine Steuerung (200), umfassend eine Vielzahl von Steuerkarten (202), wobei eine Vielzahl der Steuerkarten (202) auf einer Eins-zu-eins-Basis entsprechend einer Vielzahl der Laserbearbeitungsbaugruppen (40) der Plattenherstellungsvorrichtung zum Lasergravieren (100) angeordnet sind, um eine Vielzahl der Laserbearbeitungsbaugruppen (40) darauf zu begrenzen synchron zu arbeiten;
eine Mehrachsen-Numerik-Servoplattform (300), die mit der Steuerung (200) verbunden ist und zum Empfangen eines von der Steuerung (200) gesendeten Steuersignals und zum Bereitstellen einer genauen Positionierung für die XY-Bewegungsplattform (20) der Plattenherstellungsvorrichtung zum Lasergravieren (100) und für die von den Laserbearbeitungsbaugruppen (40) der Plattenherstellungsvorrichtung zum Lasergravieren (100) durchgeführte Lasergravur gemäß dem Steuersignal verwendet wird.

16. Das Steuersystem nach Anspruch 15, ferner umfassend:
ein Panoramaanzeigesystem (400), das mit der Steuerung (200) verbunden ist und zum Anzeigen des Arbeitszustands der Plattenherstellungsvorrichtung zum Lasergravieren (100) verwendet wird.

17. Ein Plattenherstellungsverfahren zum Lasergravieren unter Verwendung der Plattenherstellungsvorrichtung zum Lasergravieren (100) nach einem der Ansprüche 1 bis 14, umfassend die folgenden Schritte:
Aufteilen einer aktuellen Gravureinheit auf einer Druckplatte in eine Vielzahl von Arbeitsbereichen;
Bewegen der Positionen der Laserbearbeitungsbaugruppen (40), wobei jede Laserbearbeitungsbaugruppe (40) einem unabhängigen Arbeitsbereich entspricht;
Begrenzen der Vielzahl von Laserbearbeitungsbaugruppen (40), um gleichzeitig eine Lasergravur an den jeweiligen Arbeitsbereichen durchzuführen; und
Abschließen der Bearbeitungsarbeit der aktuellen Gravureinheit.

18. Das Plattenherstellungsverfahren nach Anspruch 17, wobei der Schritt des Aufteilens einer aktuellen Gravureinheit auf einer Druckplatte in eine Vielzahl von Arbeitsbereichen umfasst:
Lesen einer Mustergravurdatei;
Messen der Größe und der Ebenheit der vollen Breite der Druckplatte;
Durchführen einer dreidimensionalen Neumodellierung der Druckplatte gemäß einem Messergebnis und Erzeugen eines 3D-Modells; und
Aufteilen der Druckplatte in eine Vielzahl von Arbeitsbereichen gemäß dem 3D-Modell.

19. Das Plattenherstellungsverfahren nach Anspruch 18, wobei der Schritt des Bewegens der Positionen der Laserbearbeitungsbaugruppen (40) umfasst:
Anpassen der Positionen der Laserbearbeitungsbaugruppen (40) gemäß dem 3D-Modell; und
Anpassen der Positionen der Fokuspunkte der Bearbeitungsköpfe (43) der Laserbearbeitungsbaugruppen (40) gemäß dem 3D-Modell.

20. Das Plattenherstellungsverfahren nach einem der Ansprüche 17 bis 19, wobei es nach dem Schritt des Abschließens der Bearbeitungsarbeit der aktuellen Gravureinheit umfasst:
Begrenzen der XY-Bewegungsplattform (20) und Bewegen der nächsten Gravureinheit, die an die aktuelle Gravureinheit auf der Druckplatte angrenzt, zu der Position, die der Laserbearbeitungsbaugruppe (40) entspricht;
Zurückkehren zur Durchführung des Schritts des Aufteilens einer aktuellen Gravureinheit auf der Druckplatte in eine Vielzahl von Arbeitsbereichen; und
Abschließen der Bearbeitungsarbeit aller Gravureinheiten auf der Druckplatte.

21. Das Plattenherstellungsverfahren nach Anspruch 20, wobei es nach dem Schritt des Abschließens der Bearbeitungsarbeit der aktuellen Gravureinheit umfasst:
Erfassen der Verbindung zwischen benachbarten Gravureinheiten.

22. Das Plattenherstellungsverfahren nach Anspruch 20, wobei die Druckplatte eine Tiefdruckplatte ist und es nach dem Schritt des Abschließens der Bearbeitungsarbeit aller Gravureinheiten auf der Druckplatte ferner umfasst:
Durchführen einer Ultraschallreinigungsbehandlung an der Tiefdruckplatte;
Durchführen einer Schleifbehandlung an der Tiefdruckplatte;
Durchführen einer Verchromungsbehandlung an der Tiefdruckplatte; und
Drucken mit der Tiefdruckplatte auf einer Maschine.

23. Das Plattenherstellungsverfahren nach Anspruch 20, wobei die Druckplatte eine Siebdruckplatte ist und es nach dem Schritt des Abschließens der Bearbeitungsarbeit aller Gravureinheiten auf der Druckplatte ferner umfasst:
Schweißen der Siebdruckplatte zu einer zylindrischen Form;
Erfassen der Qualität der Siebdruckplatte;
Herstellen der zylindrischen Siebdruckplatte zu einer Siebdruckplattenwalze; und
Drucken mit der Siebdruckplattenwalze auf der Maschine.

## Revendications

1. Appareil de fabrication de plaques pour gravure au laser (100) comprenant :
une base (10) ;
une plateforme de mouvement XY (20) disposée sur la base (10) de façon à se déplacer transversalement et utilisée pour porter une plaque d'impression ;
une plateforme de support (30) disposée sur la base (10), dans lequel un espace de mouvement est ménagé entre la plateforme de support (30) et la base (10) et permet le mouvement transversal de la plateforme de mouvement XY (20) ;
une pluralité d'ensembles d'usinage au laser (40), les ensembles d'usinage au laser (40) sont reliés à la plateforme de support (30), et au moins une partie des ensembles d'usinage au laser (40) est adaptée pour se déplacer par rapport à la plateforme de support (30) et est configurée pour effectuer une gravure au laser sur la plaque d'impression ;
dans lequel chacun des ensembles d'usinage au laser (40) comprend :
une source de lumière laser (41) ménagée sur la plateforme de support (30) et utilisée pour émettre un laser ;
un trajet optique laser (42) relié à la source de lumière laser (41) et utilisé pour l'émission de laser ; et
une tête de traitement (43) située au-dessus de la plateforme de mouvement XY (20) et reliée au trajet optique laser (42), dans lequel la tête de traitement (43) est adaptée pour se déplacer par rapport à la plateforme de support (30), et est ménagée en correspondance avec la plaque d'impression pour réaliser une gravure au laser ;
**caractérisé en ce que** l'appareil de fabrication de plaques pour gravure au laser (100) comprend en outre :
un système de mesure visuelle (50) comprenant une caméra tridimensionnelle (51), dans lequel la caméra tridimensionnelle (51) fait face à la plateforme de mouvement XY (20) et est utilisée pour détecter la plaque d'impression ;
le système de mesure visuelle (50) comprend en outre un dispositif de vision industrielle en plan (52) et un dispositif microscope de mesure tridimensionnelle (53),
dans lequel, le dispositif de vision industrielle en plan (52) est relié à la caméra tridimensionnelle (51) et est utilisé pour la réception des données de détection de la caméra tridimensionnelle (51) avant la gravure au laser pour réaliser une re-modélisation tridimensionnelle pour la plaque d'impression en fonction des données de détection ;
le dispositif de vision industrielle en plan (52) est relié à la caméra tridimensionnelle (51), et est utilisé pour la réception des données de détection de la caméra tridimensionnelle (51) pendant la gravure au laser et après l'achèvement de la gravure au laser pour réaliser une détection de qualité sur la région de travail de la plaque d'impression ;
la source de lumière laser (41) comprend un dispositif laser femtoseconde ;
le trajet optique laser (42) est pourvu d'un élément de trajet optique (423) ;
l'élément de trajet optique (423) comprend au moins l'un parmi un dispositif de mise en forme d'espace et un dispositif de mise en forme de temps ;
la paroi supérieure de la plateforme de support (30) est pourvue d'une plateforme de mouvement de trajet optique, au moins une partie du trajet optique laser (42) est ménagée sur la plateforme de mouvement de trajet optique, et la plateforme de mouvement de trajet optique est configurée comme un élément capable de se déplacer transversalement par rapport à la plateforme de support (30) ; et
au moins une partie de l'ensemble d'usinage au laser (40) est ménagée sur la plateforme de mouvement de trajet optique ;
un châssis de portique (12) est ménagé sur la base (10), un deuxième ensemble de mouvement transversal (13) est ménagé sur le châssis de portique (12), la caméra tridimensionnelle (51) est reliée au châssis de portique (12) à travers le deuxième ensemble de mouvement transversal (13), et la caméra tridimensionnelle (51) est positionnée au-dessus de la plateforme de mouvement XY (20), et le deuxième ensemble de mouvement transversal (13) comprend : un rail de guidage d'axe X de caméra (131) et un rail de guidage d'axe Z de caméra (132) qui est relié de manière coulissante au rail de guidage d'axe X de caméra (131), dans lequel la direction d'extension du rail de guidage d'axe X de caméra (131) est perpendiculaire à la direction d'extension du rail de guidage d'axe Z de caméra (132) ;
un deuxième mécanisme d'entraînement d'axe X en liaison de transmission avec la caméra tridimensionnelle (51), dans lequel le deuxième mécanisme d'entraînement d'axe X est configuré pour entraîner la caméra tridimensionnelle (51) pour exécuter un mouvement de va-et-vient le long de la direction d'extension du rail de guidage d'axe X de caméra (131) ; et
un deuxième mécanisme d'entraînement d'axe Z en liaison de transmission avec la caméra tridimensionnelle (51), dans lequel le deuxième mécanisme d'entraînement d'axe Z est configuré pour entraîner la caméra tridimensionnelle (51) pour exécuter un mouvement de va-et-vient le long de la direction d'extension du rail de guidage d'axe Z de caméra (132).

2. Appareil de fabrication de plaques (100) selon la revendication 1, dans lequel la plateforme de support (30) est pourvue d'un premier ensemble de mouvement transversal (31), et la tête de traitement (43) est reliée au premier ensemble de mouvement transversal (31) ;
le premier ensemble de mouvement transversal (31) comprend un rail de guidage d'axe X de tête de traitement (311) et un premier mécanisme d'entraînement d'axe X, le premier mécanisme d'entraînement d'axe X est en liaison de transmission avec la tête de traitement (43), et le premier mécanisme d'entraînement d'axe X est configuré pour entraîner la tête de traitement (43) pour exécuter un mouvement de va-et-vient le long de la direction d'extension du rail de guidage d'axe X de tête de traitement (311), dans lequel la direction d'extension du rail de guidage d'axe X de tête de traitement (311) est parallèle au plan où la plateforme de mouvement XY (20) est située.

3. Appareil de fabrication de plaques (100) selon la revendication 2, dans lequel
le premier ensemble de mouvement transversal (31) comprend un rail de guidage d'axe Z de tête de traitement (312) et un premier mécanisme d'entraînement d'axe Z relié au rail de guidage d'axe X de tête de traitement (311), le premier mécanisme d'entraînement d'axe Z est en liaison de transmission avec la tête de traitement (43), et le premier mécanisme d'entraînement d'axe Z est configuré pour amener la tête de traitement (43) à exécuter un mouvement de va-et-vient le long de la direction d'extension du rail de guidage d'axe Z de tête de traitement (312) ;
l'un parmi le rail de guidage d'axe X de tête de traitement (311) et le rail de guidage d'axe Z de tête de traitement (312) est relié à la plateforme de support (30), et l'autre est relié à la tête de traitement (43), dans lequel la direction d'extension du rail de guidage d'axe Z de tête de traitement (312) est perpendiculaire au plan où la plateforme de mouvement XY (20) est située.

4. Appareil de fabrication de plaques (100) selon la revendication 1, dans lequel la tête de traitement (43) comprend l'un parmi un galvanomètre à balayage (431), un galvanomètre de découpe rotatif, un miroir rotatif à prismes multiples et un modulateur.

5. Appareil de fabrication de plaques (100) selon la revendication 1, dans lequel
la tête de traitement (43) comprend un galvanomètre à balayage (431) et un objectif aplanisseur de champ (432), le galvanomètre à balayage (431) est relié au trajet optique laser (42), et l'objectif aplanisseur de champ (432) est relié au galvanomètre à balayage (431) et est ménagé en-dessous du galvanomètre à balayage (431) et configuré pour limiter la région de traitement du galvanomètre à balayage (431).

6. Appareil de fabrication de plaques (100) selon l'une des revendications 2 à 5, dans lequel
le trajet optique laser (42) est pourvu d'une lentille réfléchissante (421), et la lentille réfléchissante (421) est ménagée au niveau du point de transition du trajet optique laser (42) et est configurée pour changer la direction de transmission d'un faisceau laser.

7. Appareil de fabrication de plaques (100) selon l'une des revendications 1 à 6, dans lequel
le trajet optique laser (42) est pourvu d'un tube de protection de trajet optique télescopique (422) ;
la plateforme de mouvement de trajet optique est pourvue d'une lentille réfléchissante (421), la plateforme de support (30) est pourvue d'une lentille réfléchissante (421) correspondante, et le tube de protection de trajet optique télescopique (422) est ménagé entre deux lentilles réfléchissantes (421) correspondantes.

8. Appareil de fabrication de plaques (100) selon l'une des revendications 1 à 6, dans lequel
une partie de la source de lumière laser (41) et du trajet optique laser (42) est ménagée sur la plateforme de mouvement de trajet optique.

9. Appareil de fabrication de plaques (100) selon l'une des revendications 2 à 5, dans lequel
l'élément de trajet optique (423) comprend en outre au moins l'un parmi un dispositif d'expansion et de collimation de faisceau, un dispositif de réglage de point de focalisation dynamique et un dispositif de détection.

10. Appareil de fabrication de plaques (100) selon l'une des revendications 1 à 5, dans lequel
le nombre d'ensembles d'usinage au laser (40) est de trois.

11. Appareil de fabrication de plaques (100) selon l'une des revendications 1 à 5, comprenant en outre :
un dispositif d'aspiration de poussière (11) comprenant une embouchure d'aspiration de poussière, dans lequel l'embouchure d'aspiration de poussière est ménagée dans la plateforme de mouvement XY (20), et le dispositif d'aspiration de poussière (11) est utilisé pour la collecte des gaz et de la poussière générés pendant la gravure au laser.

12. Appareil de fabrication de plaques (100) selon l'une des revendications 1 à 5, dans lequel
un dispositif de réfrigération est ménagé sur la base (10), et une sortie d'air du dispositif de réfrigération fait face à la plateforme de mouvement XY (20) et est utilisée pour refroidir la région de traitement de la plaque d'impression.

13. Appareil de fabrication de plaques (100) selon l'une des revendications 1 à 5, dans lequel
une table porteuse (21) est ménagée sur la plateforme de mouvement XY (20), et la table porteuse (21) présente une forme de plaque ;
la plateforme de mouvement XY (20) comprend une plateforme d'axe X (22) et une plateforme d'axe Y (23), qui sont reliées l'une à l'autre, et la direction de mouvement transversal de la plateforme d'axe X (22) est perpendiculaire à la direction de mouvement transversal de la plateforme d'axe Y (23) ;
dans lequel l'une parmi la plateforme d'axe X (22) et la plateforme d'axe Y (23) est reliée à la base (10), alors que l'autre est reliée à la table porteuse (21).

14. Appareil de fabrication de plaques (100) selon la revendication 13, dans lequel
la table porteuse (21) est reliée de manière amovible à la plateforme de mouvement XY (20), et la table porteuse (21) est une table porteuse à adsorption par pression négative ou une table porteuse creuse.

15. Système de commande comprenant :
l'appareil de fabrication de plaques (100) selon l'une des revendications 1 à 14 ;
une unité de commande (200) comprenant une pluralité de cartes de commande (202), dans lequel une pluralité des cartes de commande (202) est disposée tout en correspondant une-par-une à une pluralité des ensembles d'usinage au laser (40) de l'appareil de fabrication de plaques par gravure au laser (100), pour limiter une pluralité des ensembles d'usinage au laser (40) à fonctionner de manière synchrone ;
une plateforme d'asservissement à commande numérique à axes multiples (300) reliée à l'unité de commande (200) et utilisée pour recevoir un signal de commande envoyé par l'unité de commande (200) et fournir un positionnement précis pour la plateforme de mouvement XY (20) de l'appareil de fabrication de plaques par gravure au laser (100) et pour la gravure au laser effectuée par les ensembles d'usinage au laser (40) de l'appareil de fabrication de plaques par gravure au laser (100) en fonction du signal de commande.

16. Système de commande selon la revendication 15, comprenant en outre :
un système d'affichage panoramique (400) relié à l'unité de commande (200) et utilisé pour l'affichage de l'état de fonctionnement de l'appareil de fabrication de plaques par gravure au laser (100).

17. Procédé de fabrication de plaques pour gravure au laser à l'aide de l'appareil de fabrication de plaques pour gravure au laser (100) selon l'une des revendications 1 à 14, comprenant les étapes suivantes :
la division d'une unité de gravure actuelle sur une plaque d'impression en une pluralité de régions de travail ;
le déplacement des positions d'ensembles d'usinage au laser (40), et chaque ensemble d'usinage au laser (40) correspond à une région de travail indépendante ;
la limitation de la pluralité d'ensembles d'usinage au laser (40) à effectuer une gravure au laser sur des régions de travail respectives de manière simultanée ; et
la réalisation du travail de traitement de l'unité de gravure actuelle.

18. Procédé de fabrication de plaques selon la revendication 17, dans lequel l'étape de division d'une unité de gravure actuelle sur une plaque d'impression en une pluralité de régions de travail comprend :
la lecture d'un fichier de gravure de motif ;
la mesure de la taille et de la planéité de la largeur totale de la plaque d'impression ;
la réalisation d'une re-modélisation tridimensionnelle sur la plaque d'impression en fonction d'un résultat mesuré et la génération d'un modèle 3D ; et
la division de la plaque d'impression en une pluralité de régions de travail en fonction du modèle 3D.

19. Procédé de fabrication de plaques selon la revendication 18, dans lequel l'étape de déplacement des positions d'ensembles d'usinage au laser (40) comprend :
le réglage des positions des ensembles d'usinage au laser (40) en fonction du modèle 3D ; et
le réglage des positions des points de focalisation des têtes de traitement (43) des ensembles d'usinage au laser (40) en fonction du modèle 3D.

20. Procédé de fabrication de plaques selon l'une des revendications 17 à 19, dans lequel, après l'étape de réalisation du travail de traitement de l'unité de gravure actuelle, il comprend :
la limitation de la plateforme de mouvement XY (20) et le déplacement de l'unité de gravure suivante adjacente à l'unité de gravure actuelle sur la plaque d'impression jusqu'à la position correspondant à l'ensemble d'usinage au laser (40) ;
le retour à la réalisation de l'étape de division d'une unité de gravure actuelle sur la plaque d'impression en une pluralité de régions de travail ; et
la réalisation du travail de traitement de toutes les unités de gravure sur la plaque d'impression.

21. Procédé de fabrication de plaques selon la revendication 20, dans lequel, après l'étape de réalisation du travail de traitement de l'unité de gravure actuelle, il comprend :
la détection de la liaison entre des unités de gravure adjacentes.

22. Procédé de fabrication de plaques selon la revendication 20, dans lequel la plaque d'impression est une plaque de gravure, après l'étape de réalisation du travail de traitement de toutes les unités de gravure sur la plaque d'impression, il comprend en outre :
la réalisation d'un traitement de nettoyage par ultrasons sur la plaque de gravure ;
la réalisation d'un traitement de meulage sur la plaque de gravure ;
la réalisation d'un traitement de chromage sur la plaque de gravure ; et
l'impression de la plaque de gravure sur une machine.

23. Procédé de fabrication de plaques selon la revendication 20, dans lequel, la plaque d'impression est une plaque de sérigraphie, après l'étape de réalisation du travail de traitement de toutes les unités de gravure sur la plaque d'impression, il comprend en outre :
la soudure de la plaque de sérigraphie en une forme cylindrique ;
la détection de la qualité de la plaque de sérigraphie ;
la préparation de la plaque de sérigraphie cylindrique en un rouleau de plaque de sérigraphie ; et
l'impression du rouleau de plaque de sérigraphie sur la machine.
